# EUROPEAN PATENT APPLICATION

(11) **EP 4 534 374 A1**
(43) Date of publication of application: **09.04.2025**
(21) Application number: 23862281.5
(22) Date of filing: 01.09.2023
(51) Int. Cl.: B60W 50/14, G06F 1/3203, B60L 58/12, B60L 15/20

(54) **POWER SAVING METHOD, POWER SAVING DEVICE, AND VEHICLE**

(30) Priority: 05.09.2022 CN 202211080375
(71) Applicant: Huawei Technologies Co., Ltd., Shenzhen, Guangdong 518129 (CN)
(72) Inventor: GUO, Hao, Shenzhen, Guangdong 518129 (CN); LI, Lingfei, Shenzhen, Guangdong 518129 (CN)
(74) Representative: Maiwald GmbH
(86) International application number: PCT/CN2023/116468
(87) International publication number: WO 2024/051587

(57) **Abstract**

A power saving method, a power saving apparatus, and a vehicle are used in the field of intelligent vehicles. According to the power saving method, when it is detected that a battery level decreases to a first preset value, a user may be automatically reminded whether to enter a power saving mode (1010); when an operation of confirming, by the user, to enable the power saving mode is detected, the user is reminded again whether to enable the power saving mode (1020); and after the user performs a reconfirmation, the power saving mode is formally enabled (1030). According to the power saving method, when it is detected that the battery level of the vehicle decreases to a preset battery level, the user may be automatically reminded, in a plurality of manners such as a voice and/or a pop-up window, whether to enable an ultra power saving mode, to improve a battery life of the vehicle. **In** addition, driving safety can be further ensured through a plurality of reminders.

## Description

This application claims priority to Chinese Patent Application No. 202211080375.4, filed with the China National Intellectual Property Administration on September 5, 2022 and entitled "POWER SAVING METHOD, POWER SAVING APPARATUS, AND VEHICLE", which is incorporated herein by reference in its entirety.

### TECHNICAL FIELD

Embodiments of this application relate to the field of intelligent vehicles, and more specifically, to a power saving method, a power saving apparatus, and a vehicle.

### BACKGROUND

Currently, it is increasingly common for a user to drive a new energy vehicle. Use duration of the new energy vehicle depends on a battery level. When the battery level of the vehicle is low, the user cannot use the vehicle.

Therefore, how to improve a battery life of a vehicle with a limited battery level becomes a technical problem that needs to be resolved.

### SUMMARY

Embodiments of this application provide a power saving method, a power saving apparatus, and a vehicle. In the technical solution, when it is detected that a battery level of a vehicle decreases to a preset battery level, a user may be automatically reminded, in a plurality of manners such as a voice and/or a pop-up window, whether to enable an ultra power saving mode, to improve a battery life of the vehicle.

According to a first aspect, a power saving method is provided, including: displaying a first reminder widget on a first display when detecting that a battery level decreases to a first preset value, where the first reminder widget reminds a user whether to enable a power saving mode; displaying a second reminder widget on the first display when detecting an operation of confirming, by the user, to enable the power saving mode, where the second reminder widget reminds the user again whether to enable the power saving mode; and enabling the power saving mode when detecting an operation of reconfirming, by the user, to enable the power saving mode.

For example, the first display may be a central display screen of a vehicle.

In embodiments of this application, when it is detected that the battery level decreases to the first preset value, the first reminder widget reminding the user whether to enable the power saving mode may be automatically displayed on the display; when the operation of confirming, by the user, to enable the power saving mode is detected, the second reminder widget reminding the user again whether to enable the power saving mode is further displayed; and when the operation of reconfirming, by the user, to enable the power saving mode is detected, the power saving mode is enabled. In the technical solution, the user may be reminded, in an active reminding manner, whether to enable the power saving mode, so that user experience can be improved. In addition, because the power saving mode imposes some limitations on the vehicle, the user is reminded through a plurality of reminders, to help improve driving safety.

In some embodiments, a preset battery level or the first preset value herein may be customized and entered by the user, may be preset when the vehicle is delivered from a factory, may be determined by a computer system in the vehicle based on a historical power consumption status of the vehicle, or the like. This is not limited in this application.

In some embodiments, a widget is an interface display form. In some embodiments, any display form similar to a widget may be considered as a "widget". In some other embodiments, a widget may also be specifically an FA (Feature Ability) widget. In some other embodiments, a floating window or an interface display form similar to a floating window may also be considered as a widget.

It should be understood that the power saving mode means that an electronic device enters a state, and in the state, power is saved in a manner like disabling an unnecessary function and/or changing a display effect. A specific manner in which power is saved is not limited in this application. In addition, the "power saving mode" is merely an example of name. In a specific product, other names with a same or similar meaning, for example, "ultra power saving mode", "energy saving mode", "saving mode", and "endurance mode", may be used, and should be understood as falling within the protection scope of this application.

With reference to the first aspect, in an implementation of the first aspect, the method further includes: displaying a third reminder widget on the first display when detecting an operation of confirming, by the user, not to enable the power saving mode or when detecting an operation of the user that is not related to the power saving mode, where the third reminder widget reminds the user to enable the power saving mode by using the third reminder widget.

In embodiments of this application, the third reminder widget may be displayed on the first display when the operation of confirming, by the user, not to enable the power saving mode or the operation of the user that is not related to the power saving mode is detected, and the user may perform an operation of enabling the power saving mode by using the third reminder widget. In the technical solution, the user can conveniently perform the operation of enabling the power saving mode by tapping the third reminder widget on a display, to improve user experience.

With reference to the first aspect, in an implementation of the first aspect, the method further includes: displaying the second reminder widget on the first display when detecting an operation of tapping the third reminder widget by the user; and enabling the power saving mode when detecting the operation of reconfirming, by the user, to enable the power saving mode.

In embodiments of this application, when the user taps the third reminder widget, a reminder widget for a reconfirmation may be further displayed on the first display, and the power saving mode is enabled when a confirmation operation of the user is detected. In the technical solution, the user may be reminded through a plurality of reminders, to help improve driving safety.

With reference to the first aspect, in an implementation of the first aspect, when the power saving mode is enabled, the method further includes: displaying an identifier of the power saving mode in a status bar on the first display; and/or displaying the identifier of the power saving mode on a second display.

For example, the first display is the central display screen of the vehicle, and the second display is an instrument display screen of the vehicle.

In embodiments of this application, when the power saving mode is enabled, the identifier of the power saving mode may be displayed, to notify the user that the power saving mode is currently used.

With reference to the first aspect, in an implementation of the first aspect, when the power saving mode is enabled, the method further includes: outputting a first reminder voice, where the first reminder voice reminds the user whether to search for a nearby charging pile.

In embodiments of this application, when the power saving mode is enabled, the user may be automatically reminded whether to search for the nearby charging pile. In the technical solution, when the power saving mode is enabled for the vehicle, the vehicle may have a charging requirement. Therefore, a voice reminds the user, so that intelligence of the vehicle and driving experience of the user can be improved.

In some other embodiments, before the outputting a first reminder voice, the method further includes:
outputting a reminder voice A, where the reminder voice A reminds the user that the vehicle has entered the power saving mode; or outputting a reminder voice B reminding to exit the power saving mode.

In embodiments of this application, the user may be reminded, in a voice reminding manner, that the vehicle has entered the power saving mode, or the user may be reminded, in a voice reminding manner, of how to exit the power saving mode, to help improve user experience.

With reference to the first aspect, in an implementation of the first aspect, before the displaying a first reminder widget on a first display, the method further includes: outputting an alert tone of the power saving mode.

In embodiments of this application, when it is detected that the battery level decreases to the first preset value, the alert tone of the power saving mode may be output to the user, and the user is reminded, in a plurality of manners such as the output alert tone and a reminder widget, whether to enable the power saving mode, so that the user can conveniently enable the ultra power saving mode.

With reference to the first aspect, in an implementation of the first aspect, when the first reminder widget is displayed on the first display, and/or when the second reminder widget is displayed on the first display, the method further includes: outputting a second reminder voice, where the second reminder voice reminds the user whether to enable the power saving mode.

In embodiments of this application, when a reminder widget is displayed on a display, a voice reminder message is output to the user at the same time, so that the user can be reminded, in a plurality of manners, whether to enable the power saving mode. Therefore, the user can obtain the reminder message more conveniently in a driving process, and driving safety can be reminded to an extent.

With reference to the first aspect, in an implementation of the first aspect, before the outputting an alert tone of the power saving mode, the method further includes: determining that the vehicle is not currently in a complex driving operation; and/or determining that a current distance between the vehicle and a navigation destination is longer than a preset distance.

In embodiments of this application, before outputting the alert tone, the vehicle further needs to determine that the vehicle is not currently in the complex driving operation, and/or determine that the current distance between the vehicle and the navigation destination is longer than the preset distance, so that it can be avoided that a voice is output to the user when the user is highly focused. In the technical solution, driving safety can be reminded to an extent.

With reference to the first aspect, in an implementation of the first aspect, before the displaying a first reminder widget on a first display, the method further includes: determining that the vehicle is not currently in a preset driving mode.

For example, the preset driving mode may be a get-unstuck mode, a snow mode, an adaptive cruise control mode, or the like.

In this technical solution, when the vehicle is in the preset driving mode, to ensure driving safety, after detecting that the battery level decreases to the first preset value, the vehicle does not perform a reminder for enabling the power saving mode.

According to a second aspect, a power saving apparatus is provided, including: a control unit, configured to control a first display to display a first reminder widget when it is detected that a battery level decreases to a first preset value, where the first reminder widget reminds a user whether to enable a power saving mode. The control unit is further configured to control the first display to display a second reminder widget when an operation of confirming, by the user, to enable the power saving mode is detected, where the second reminder widget reminds the user again whether to enable the power saving mode. The control unit is further configured to enable the power saving mode when an operation of reconfirming, by the user, to enable the power saving mode is detected.

With reference to the second aspect, in an implementation of the second aspect, the control unit is further configured to control the first display to display a third reminder widget when an operation of confirming, by the user, not to enable the power saving mode or an operation of the user that is not related to the power saving mode is detected, where the third reminder widget reminds the user to enable the power saving mode by using the third reminder widget.

With reference to the second aspect, in an implementation of the second aspect, the control unit is further configured to control the first display to display the second reminder widget when an operation of tapping the third reminder widget by the user is detected; and the control unit is further configured to enable the power saving mode when the operation of reconfirming, by the user, to enable the power saving mode is detected.

With reference to the second aspect, in an implementation of the second aspect, when the power saving mode is enabled, the control unit is further configured to: control a status bar on the first display to display an identifier of the power saving mode; and/or control a second display to display the identifier of the power saving mode.

With reference to the second aspect, in an implementation of the second aspect, the power saving apparatus further includes an output module, and when the power saving mode is enabled, the output module is configured to output a first reminder voice, where the first reminder voice reminds the user whether to search for a nearby charging pile.

With reference to the second aspect, in an implementation of the second aspect, the power saving apparatus further includes the output module, and before the control unit controls the first display to display the first reminder widget, the output module is configured to output an alert tone of the power saving mode.

With reference to the second aspect, in an implementation of the second aspect, before the control unit controls the first display to display the first reminder widget, the output module is further configured to output a second reminder voice, where the second reminder voice reminds the user whether to enable the power saving mode.

With reference to the second aspect, in an implementation of the second aspect, the power saving apparatus further includes a determining module, and before the output module outputs the alert tone of the power saving mode, the determining module is configured to: determine that a vehicle is not currently in a complex driving operation; and/or determine that a current distance between the vehicle and a navigation destination is longer than a preset distance.

With reference to the second aspect, in an implementation of the second aspect, the power saving apparatus further includes the determining module, and before the control module controls the first display to display the first reminder widget, the determining module is further configured to determine that the vehicle is not currently in a preset driving mode.

According to a third aspect, a power saving apparatus is provided. The apparatus includes at least one processor and an interface circuit, the processor communicates with a display apparatus through the interface circuit, and the at least one processor is configured to: perform the method according to any one of the first aspect and the possible implementations of the first aspect, and control a display interface of the display apparatus.

According to a fourth aspect, a vehicle is provided, including at least one processor and a memory, where the at least one processor is coupled to the memory, and is configured to read and execute instructions in the memory, for performing the method according to any one of the first aspect and the possible implementations of the first aspect.

According to a fifth aspect, a chip is provided. The chip includes a processor and a communication interface, the communication interface is configured to receive a signal and transmit the signal to the processor, and the processor processes the signal, for performing the power saving method according to any one of the first aspect and the possible implementations of the first aspect.

According to a sixth aspect, a computer-readable storage medium is provided. The computer-readable storage medium stores computer instructions. When the computer instructions are run on a computer, the power saving method according to any one of the first aspect and the possible implementations of the first aspect is performed.

According to a seventh aspect, a computer program product is provided. The computer program product includes computer program code. When the computer program code is run on a computer, the power saving method according to any one of the first aspect and the possible implementations of the first aspect is performed.

### BRIEF DESCRIPTION OF DRAWINGS

FIG. 1 is a functional block diagram of a vehicle according to an embodiment of this application;
FIG. 2 is a diagram of an example of distribution of displays in a vehicle cockpit according to an embodiment of this application;
FIG. 3(a)-1 to FIG. 3(g) are a diagram of a group of graphical user interfaces GUIs according to an embodiment of this application;
FIG. 4(a)-1 to FIG. 4(e) are a diagram of another group of GUIs according to an embodiment of this application;
FIG. 5(a) to FIG. 5(d) are a diagram of another group of GUIs according to an embodiment of this application;
FIG. 6(a)-1 to FIG. 6(d) are a diagram of another group of GUIs according to an embodiment of this application;
FIG. 7(a)-1 to FIG. 7(e) are a diagram of another group of GUIs according to an embodiment of this application;
FIG. 8(a) and FIG. 8(b) are a diagram of another group of GUIs according to an embodiment of this application;
FIG. 9(a) to FIG. 9(c) are a diagram of another group of GUIs according to an embodiment of this application; and
FIG. 10 is a schematic flowchart of a power saving method according to an embodiment of this application.

### DESCRIPTION OF EMBODIMENTS

The following describes technical solutions in embodiments of this application with reference to accompanying drawings.

The vehicle in this application may be a vehicle in a broad sense, and may be a transportation means (for example, a commercial vehicle, a passenger vehicle, a motorcycle, a flight vehicle, or a train), an industrial vehicle (for example, a forklift, a trailer, or a tractor), an engineering vehicle (for example, an excavator, a bulldozer, or a crane), an agricultural device (for example, a lawn mower or a harvester), a recreation device, or a toy vehicle. A type of the vehicle is not specifically limited in embodiments of this application.

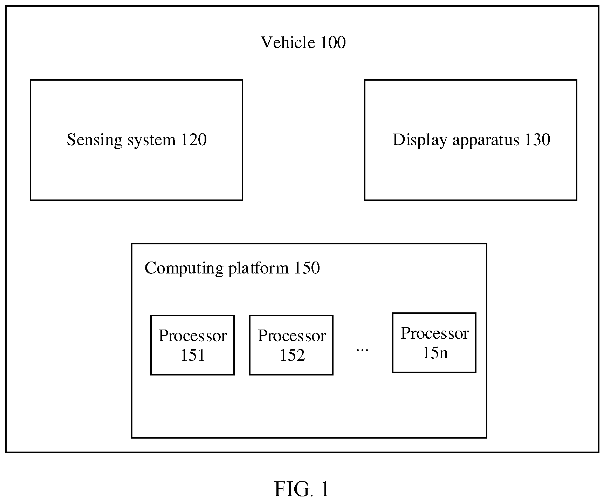

FIG. 1 is a functional block diagram of a vehicle 100 according to an embodiment of this application. The vehicle 100 may include a sensing system 120, a display apparatus 130, and a computing platform 150. The sensing system 120 may include one or more sensors that sense information about an environment around the vehicle 100. For example, the sensing system 120 may include one or more of a positioning system, an inertial measurement unit (inertial measurement unit, IMU), a lidar, a millimeter-wave radar, an ultrasonic radar, and a camera apparatus, where the positioning system may be a global positioning system (global positioning system, GPS), a BeiDou system, or another positioning system.

A part of or all functions of the vehicle 100 may be controlled by the computing platform 150. The computing platform 150 may include one or more processors, for example, processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of a part of or all of the foregoing units. In addition, the circuit may alternatively be a hardware circuit designed for artificial intelligence, and may be understood as an ASIC, for example, a neural network processing unit (neural network processing unit, NPU), a tensor processing unit (tensor processing unit, TPU), and a deep learning processing unit (deep learning processing unit, DPU). In addition, the computing platform 150 may further include a memory. The memory is configured to store instructions, and a part of or all of the processors 151 to 15n may invoke the instructions in the memory and execute the instructions, to implement corresponding functions.

The display apparatus 130 in a cockpit is mainly classified into two types: a first type is a vehicle-mounted display, and a second type is a projection display, for example, a head-up display (head-up display, HUD) apparatus. The vehicle-mounted display is a physical display, and is an important part of an in-vehicle infotainment system. A plurality of displays may be disposed in the cockpit, such as a digital instrument display screen, a central display screen, a display in front of a passenger (also referred to as a front passenger) in a front passenger seat, a display in front of a left rear passenger, and a display in front of a right rear passenger, and even a window can be used as a display. The head-up display is also referred to as a head-up display system. The head-up display is mainly configured to display driving information such as a speed and navigation on a display device (for example, a windshield) in front of a driver. In this way, line-of-sight distraction time of the driver is reduced, a pupil change caused by line-of-sight distraction of the driver is avoided, and traveling safety and comfort are improved. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. It should be understood that the HUD may also have another type of system with technology evolution. This is not limited in this application.

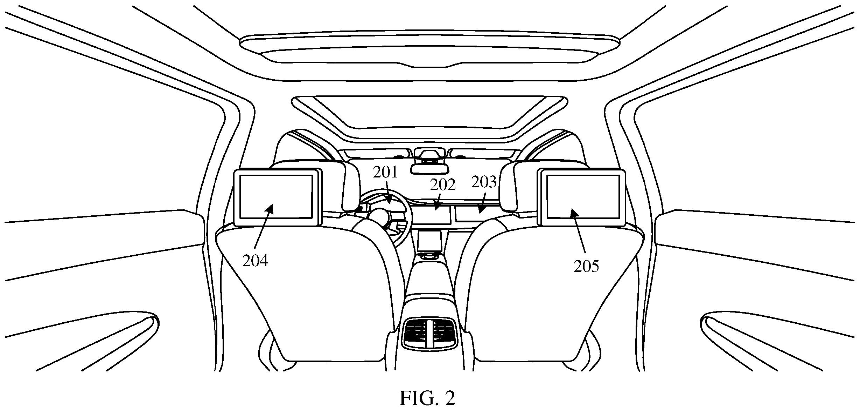

FIG. 2 is a diagram of an example of distribution of displays in a vehicle cockpit according to an embodiment of this application. As shown in FIG. 2, a vehicle cockpit may include an instrument display screen 201, a display 202 (or may be referred to as a central display screen), a display 203 (or may be referred to as a front passenger entertainment screen), a display 204 (or may be referred to as an entertainment screen in a second-row left area), and a display 205 (or may be referred to as an entertainment screen in a second-row right area).

It should be understood that a graphical user interface (graphical user interface, GUI) in the following embodiments is described by using the five-seat vehicle shown in FIG. 2 as an example. Embodiments of this application are not limited thereto. For example, for a seven-seat sport utility vehicle (sport utility vehicle, SUV), a cockpit may include a central display screen, a front passenger entertainment screen, an entertainment screen in a second-row left area, an entertainment screen in a second-row right area, an entertainment screen in a third-row left area, and an entertainment screen in a third-row right area. For another example, for a bus, a cockpit may include a front entertainment screen and a rear entertainment screen, or the cockpit may include a display in a driver area and an entertainment screen in a passenger area. In an implementation, the entertainment screen in the passenger area may alternatively be disposed on the top of the cockpit.

Before the technical solutions of this application are described, related terms that may be used in embodiments of this application are first described.

Power saving mode: a mode of a vehicle. In embodiments of this application, in the power saving mode, functions such as a vehicle speed, an air conditioner, seat heating, and the like of the vehicle are limited, to improve a battery life of the vehicle. In embodiments of this application, the power saving mode may be an ultra power saving mode of the vehicle.

Get-unstuck mode: a driving mode of the vehicle. After the get-unstuck mode is enabled for the vehicle, torque distribution to rear wheels can be increased, to effectively suppress wheel slipping, help the vehicle get unstuck, and improve safety of driving on a rough road.

Snow mode: a mode of the vehicle. After the snow mode is enabled for the vehicle, an output torque of an engine and a transmission ratio of a gearbox may be limited, to reduce a probability that the vehicle slips in a snow day.

Currently, it is increasingly common for a user to drive a new energy vehicle. Use duration of the new energy vehicle depends on a battery level. When the battery level of the vehicle is low, the user cannot use the vehicle.

Therefore, how to improve a battery life of a vehicle with a limited battery level becomes a technical problem that needs to be resolved.

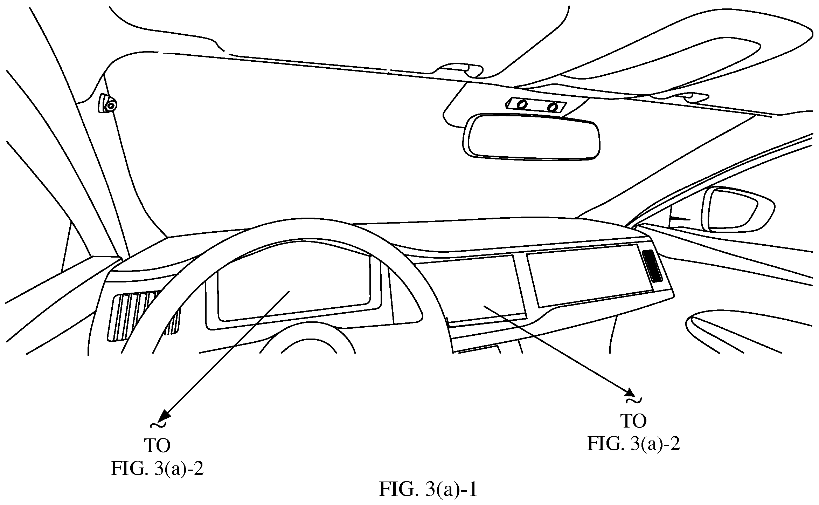

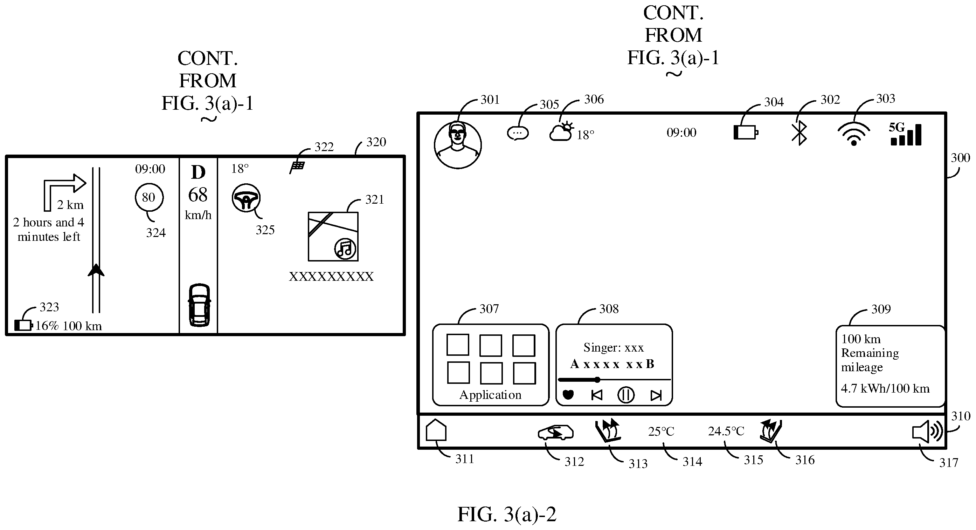

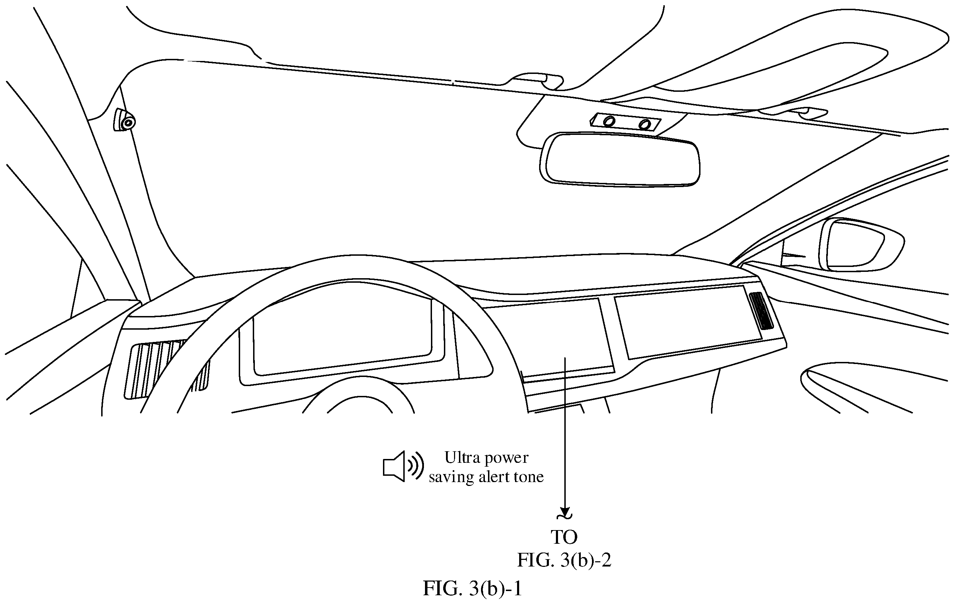

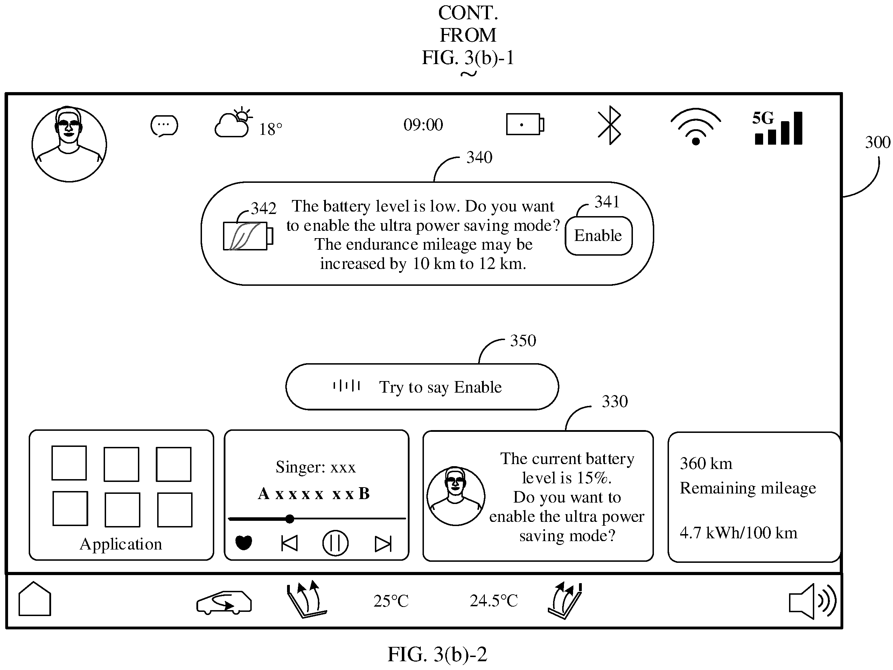

The following describes the power saving method provided in embodiments of this application with reference to several groups of graphical user interfaces (graphical user interfaces, GUIs) shown in FIG. 3(a)-1 to FIG. 9(c). In this application, an example in which a power saving mode is an ultra power saving mode is used for description.

For example, FIG. 3(a)-1 to FIG. 3(g) show a group of GUIs according to an embodiment of this application. FIG. 3(a)-1 to FIG. 3(g) show a process of a vehicle from entering an ultra power saving mode to exiting the ultra power saving mode.

Refer to FIG. 3(a)-1 and FIG. 3(a)-2. In a traveling process of the vehicle, a central display screen of the vehicle may display a display interface 300 and a function bar 310. The display interface 300 may include at least user account login information 301, a Bluetooth function icon 302, a Wi-Fi function icon 303, a state of charge icon 304, a notification center icon 305, a weather icon 306, a widget 307 for switching to display an application installed on the vehicle, a widget 308 for switching to display an in-vehicle music application, and a widget 309 for displaying a remaining traveling mileage and power consumption of the vehicle. The function bar 310 may include at least an icon 311 for switching to display a home screen of the central display screen, a vehicle internal circulation icon 312, a driver seat heating function icon 313, a driver-area air conditioner temperature display icon 314, a front-passenger-area air conditioner temperature display icon 315, a front passenger seat heating function icon 316, and a volume setting icon 317.

In some examples, the display interface 300 may further include an in-vehicle map application search box, a cellular network signal icon, a display widget of a 360-degree (°) surround view function of the vehicle, and the like.

An instrument display screen of the vehicle may display a display interface 320. The display interface 320 may include at least a navigation display area, a current vehicle speed, a maximum speed limit identifier 324, an assisted driving function icon 325, a widget 321 of an in-vehicle music application, a driving mode icon 322, a state of charge 326, and a remaining traveling mileage.

When the vehicle detects that a battery level decreases to a preset battery level A, the central display screen of the vehicle may display a GUI shown in FIG. 3(b)-1 and FIG. 3(b)-2.

For example, the preset battery level A may be 15%, 20%, 10%, or the like. In this embodiment of this application, an example in which the preset battery level A is 15% is used for description. However, this should not impose any limitation on this application.

In some other examples, when the vehicle detects that the battery level decreases to 15%, the central display screen of the vehicle may display the GUI shown in FIG. 3(b)-1 and FIG. 3(b)-2 when the vehicle determines that the vehicle meets the following condition 1.

### Condition 1:

(1) The vehicle is not currently in a complex driving operation.
   For example, the complex driving operation may be that the vehicle is turning or is about to turn consecutively, there is or is about to be an oncoming vehicle, or the like.
(2) A current distance between the vehicle and a destination is longer than a preset distance.

It should be understood that the preset distance may be determined based on the remaining traveling mileage of the vehicle, or the preset distance may be set by a system or a user. For example, the preset distance is half of the remaining traveling mileage. Alternatively, the preset distance is 30 km, 50 km, or the like.

In this way, before reminding the user whether to enable the ultra power saving mode, the vehicle may determine a current status of the vehicle. If the vehicle is in the complex driving operation or is close to the destination, the vehicle may first not remind the user to enable the ultra power saving mode, to improve driving safety.

In some other examples, before the central display screen of the vehicle displays the GUI shown in FIG. 3(b)-1 and FIG. 3(b)-2, an in-vehicle voice assistant may output an ultra power saving alert tone, to remind the user that the battery level of the vehicle is low.

Refer to FIG. 3(b)-1 and FIG. 3(b)-2. An ultra power saving mode reminder widget 340 may be displayed on the display interface 300 of the central display screen. The widget 340 may display text content "The battery level is low. Do you want to enable the ultra power saving mode? The endurance mileage may be increased by 10 km to 12 km", and the widget 340 may further include an ultra power saving icon 342 and an Enable button 341.

The display interface 300 may further display a voice assistant reminder widget 330, and the widget 330 may display text content "The current battery level is 15%. Do you want to enable the ultra power saving mode?".

It should be understood that, when the widget 340 is displayed on the display interface 300 of the central display screen, the voice assistant may synchronously broadcast the text content in the widget 330. Alternatively, after the widget 340 is displayed on the display interface 300 of the central display screen, the voice assistant broadcasts the text content in the widget 330.

The display interface 300 may further display a voice assistant dialog box 350, and the dialog box 350 may display interaction content recommended by the voice assistant to the user, for example, Try to say Enable.

In this way, when detecting that the battery level decreases to the preset battery level A, the vehicle may remind the user in a plurality of manners such as a pop-up window and a voice broadcast, so that the user efficiently obtains the reminder information, to improve driving safety.

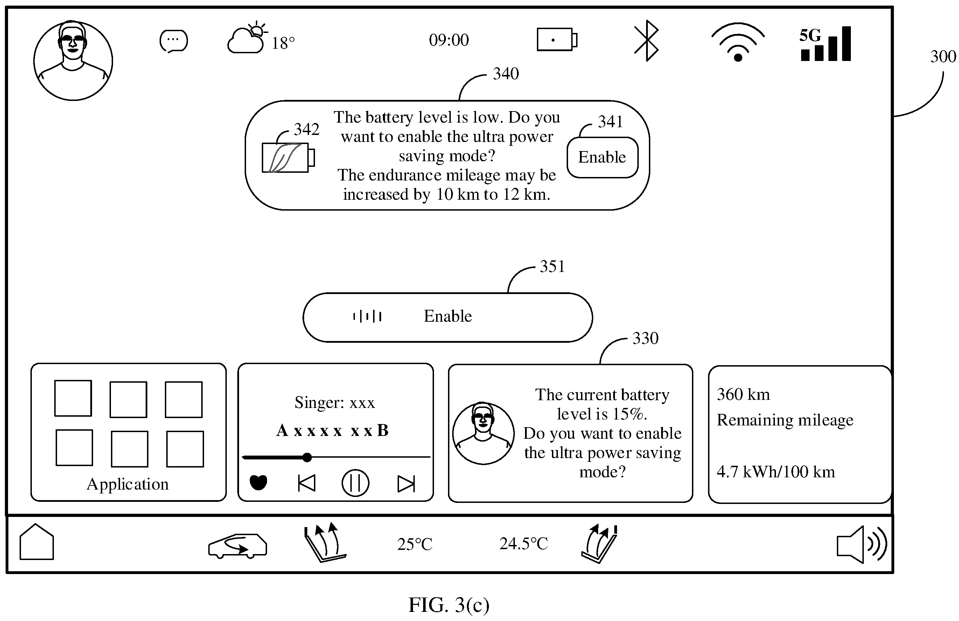

After the voice assistant detects that the user says "Enable", the central display screen of the vehicle may display a GUI shown in FIG. 3(c).

In some other examples, when the voice assistant detects a utterance that is fed back by the user and that indicates a forward operation, the central display screen of the vehicle may display the GUI shown in FIG. 3(c).

For example, the utterance indicating the forward operation may be "Enable", "OK", "Confirm", or the like.

In some other examples, after the vehicle detects an operation of tapping the Enable button 341 by the user, the central display screen of the vehicle may also display the GUI shown in FIG. 3(c).

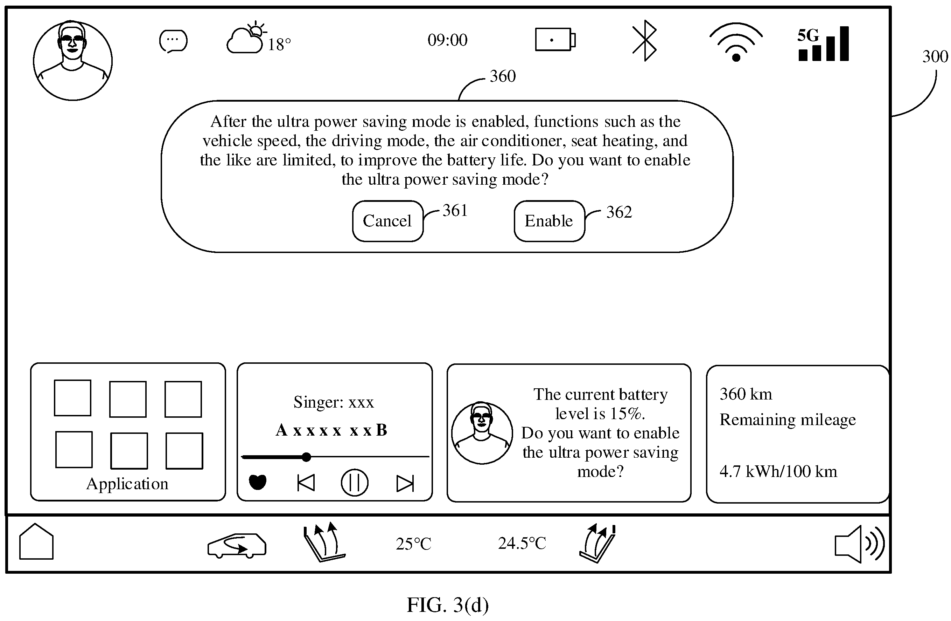

Refer to FIG. 3(c). The voice assistant displays the identified voice content "Enable" of the user in a dialog box 351. Then, the central display screen of the vehicle may display a GUI shown in FIG. 3(d).

Refer to FIG. 3(d). A confirmation widget 360 for enabling the ultra power saving mode may be displayed on the display interface 300 of the central display screen. The confirmation widget 360 may include text content "After the ultra power saving mode is enabled, functions such as the vehicle speed, the driving mode, the air conditioner, seat heating, and the like are limited, to improve the battery life. Do you want to enable the ultra power saving mode?", a Cancel button 361, and an Enable button 362.

In this way, after obtaining an instruction of the user for enabling the ultra power saving mode, the vehicle further asks, in a manner of a secondary pop-up window, the user whether to enable the ultra power saving mode, and formally enters the ultra power saving mode only after obtaining a reconfirmation of the user. Because the ultra power saving mode limits the functions of the vehicle, the vehicle enters the ultra power saving mode after the user performs the reconfirmation, so that driving safety can be ensured.

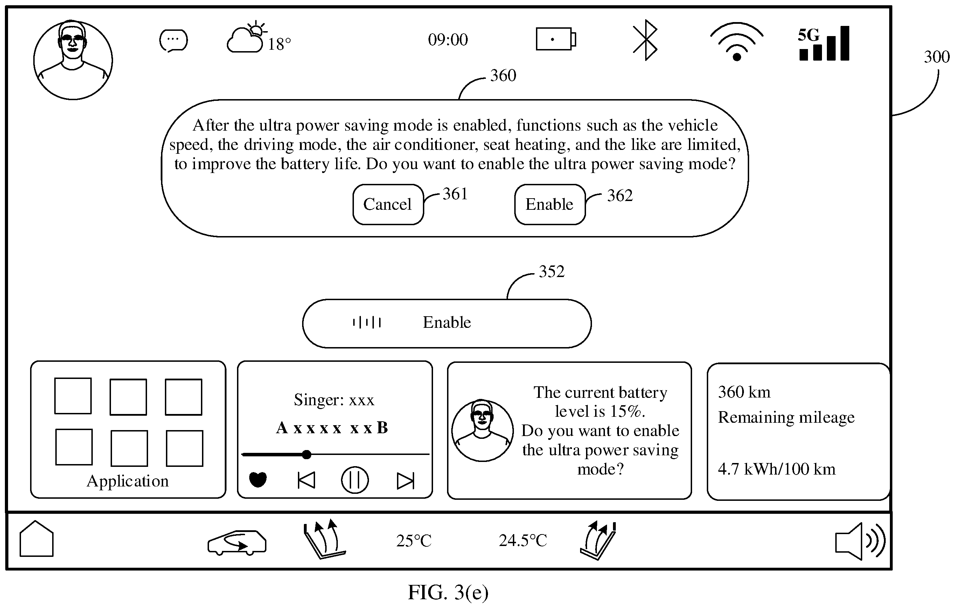

After the voice assistant detects that the user says "Enable" or "Enable the ultra power saving mode", the central display screen of the vehicle may display a GUI shown in FIG. 3(e).

It should be understood that when the voice assistant detects a utterance that is of the user and that indicates a forward operation, the central display screen of the vehicle may display the GUI shown in FIG. 3(e).

For example, the utterance indicating the forward operation may be "Enable", "OK", "Confirm", or the like.

In some other examples, after the vehicle detects an operation of tapping the Enable button 362 by the user, the central display screen of the vehicle may also display the GUI shown in FIG. 3(e).

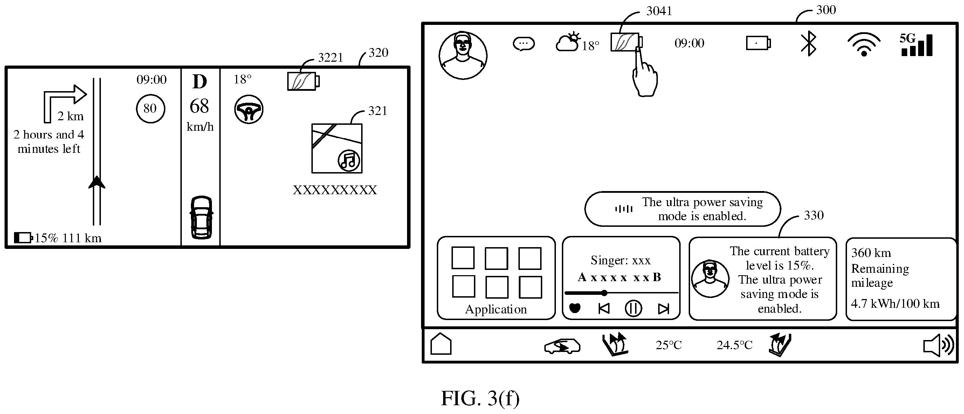

Refer to FIG. 3(e). The voice assistant displays the identified voice content "Enable" of the user in a dialog box 352. Then, the instrument display screen and the central display screen of the vehicle may display a GUI shown in FIG. 3(f).

Refer to FIG. 3(f). The vehicle enters the ultra power saving mode, and the driving mode icon on the instrument display screen changes to an ultra power saving mode icon 3221. An ultra power saving mode icon 3041 is displayed in a status bar of the central display screen. In addition, text content in the voice assistant reminder widget 330 on the display interface 330 of the central display screen changes to "The current battery level is 15%. The ultra power saving mode is enabled".

In addition, the voice assistant may further synchronously broadcast "The ultra power saving mode is enabled", to remind the user that the ultra power saving mode is enabled for the vehicle.

In some other examples, after the user taps the Enable button 362, the vehicle may also enter the ultra power saving mode.

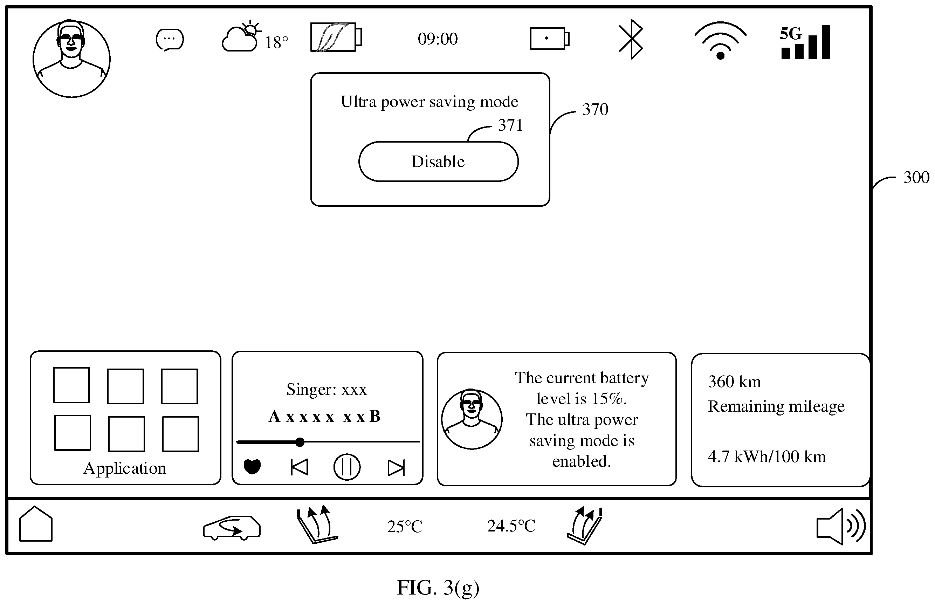

In some cases, the user may perform an active operation to enable the vehicle to exit the ultra power saving mode. After detecting an operation of tapping, by the user, the ultra power saving mode icon 3041 in the status bar of the central display screen, the vehicle may display a GUI shown in FIG. 3(g).

Refer to FIG. 3(g). A disabling widget 370 may be displayed on the display interface 300 of the central display screen of the vehicle, and the disabling widget 370 may include text content "Ultra power saving mode" and a Disable button 371.

For example, the Disable button 371 may be displayed in the disabling widget 370 in a form of a large button, to better remind the user, avoid an accidental touch of the user, and guide the user not to easily disable the mode.

After the vehicle detects an operation of tapping the Disable button 371 by the user, the ultra power saving mode may be disabled. Alternatively, the voice assistant may synchronously broadcast "The ultra power saving mode is disabled" to the user.

In another example, after the vehicle detects an operation of a voice input "Disable the ultra power saving mode" or "Exit the ultra power saving mode" of the user, the ultra power saving mode may be disabled, and the voice assistant may also broadcast "The ultra power saving mode is disabled" to the user.

In this embodiment of this application, when detecting that the battery level decreases to the preset battery level A, the vehicle may automatically remind, in a plurality of manners such as a pop-up reminder and a voice broadcast reminder on the central display screen, the user whether to enable the ultra power saving mode, to prevent the user from being distracted by a text, thereby improving driving safety. When the user confirms to enable the ultra power saving mode, the vehicle further asks, in a manner of a secondary pop-up window, the user whether to enable the ultra power saving mode, and formally enters the ultra power saving mode only after obtaining a reconfirmation of the user, to improve a battery life and use duration of the vehicle. Because the ultra power saving mode limits functions of the vehicle, the vehicle enters the ultra power saving mode after obtaining the reconfirmation of the user, so that driving safety can be ensured.

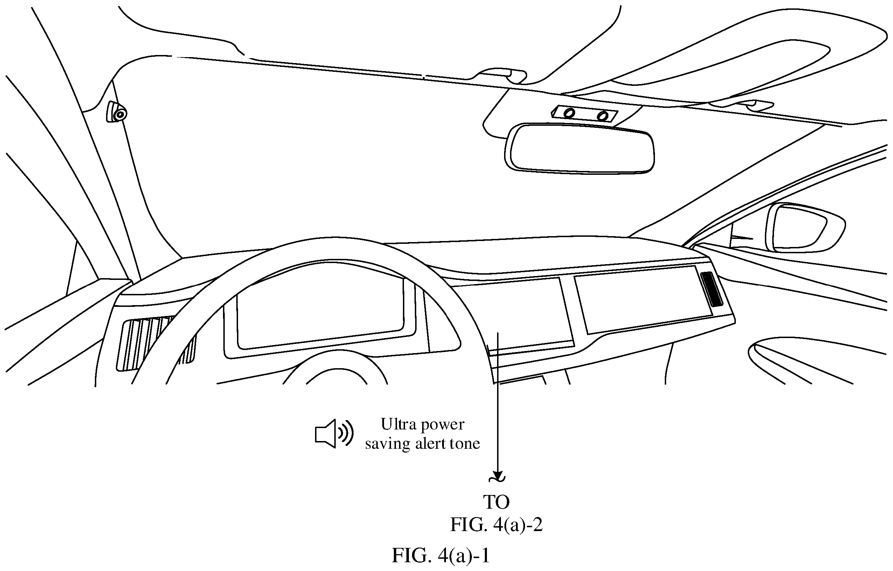

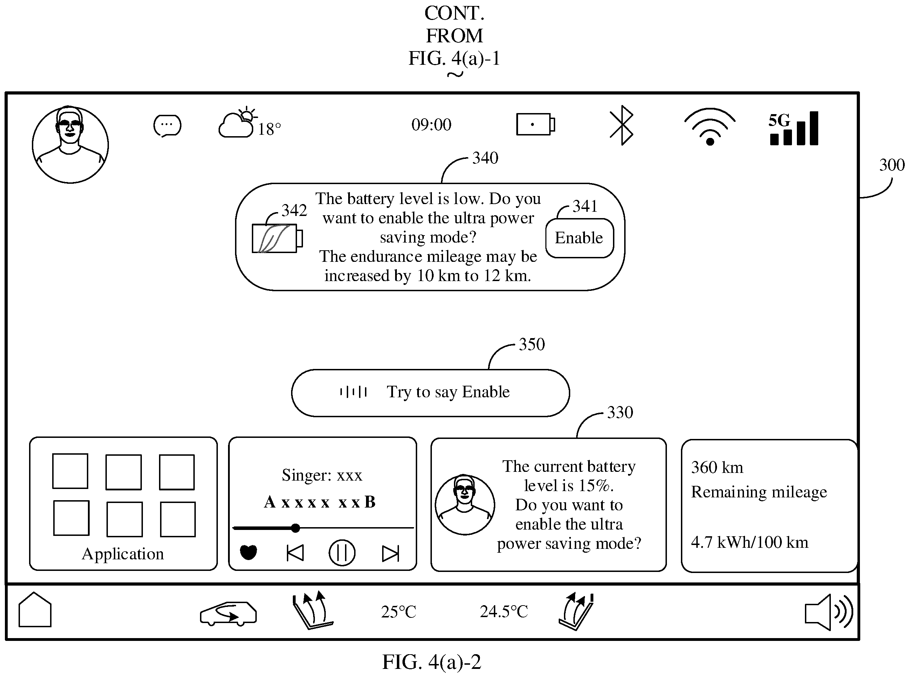

With reference to FIG. 4(a)-1 to FIG. 4(e), the following describes a technical solution in which when a vehicle detects that a battery level decreases to a preset battery level A, a user selects not to enable an ultra power saving mode when the user is reminded for the first time whether to enable the ultra power saving mode in this application.

FIG. 4(a)-1 to FIG. 4(e) show another group of GUIs according to an embodiment of this application.FIG. 4(a)-1 to FIG. 4(e) show an interaction process between the vehicle and the user.

It should be understood that, for FIG. 4(a)-1 and FIG. 4(a)-2, refer to related descriptions of FIG. 3(b)-1 and FIG. 3(b)-2. For brevity, details are not described again.

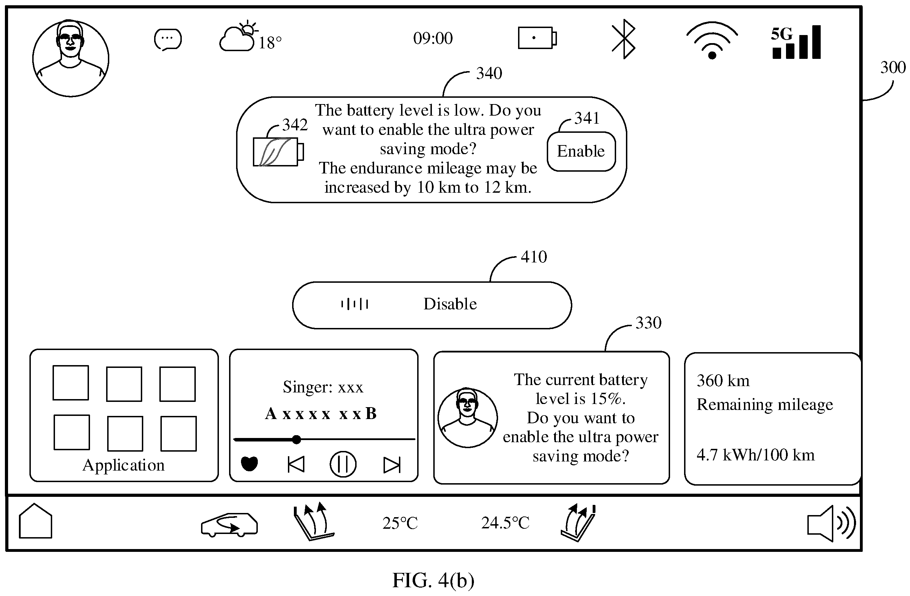

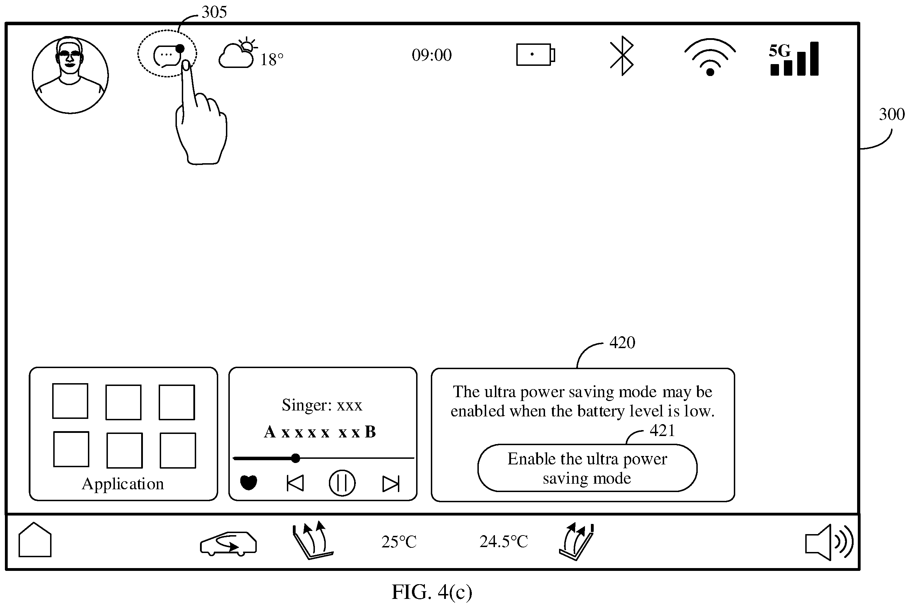

Refer to FIG. 4(b). A voice assistant displays identified voice content "Disable" of the user in a dialog box 410. Then, a central display screen of the vehicle may display a GUI shown in FIG. 4(c).

In some other examples, when the vehicle detects a utterance like "Cancel", "Disable", or "Forget it" that is input by the user through a voice and that indicates a negative operation with a negative meaning, the central display screen of the vehicle may display the GUI shown in FIG. 4(c).

In some other examples, when detecting another interruption operation of the user, for example, tapping a blank area, or detecting another instruction that is input by the user through a voice and that is not related to the current ultra power saving mode, or detecting that the user does not respond within preset time, for example, 10s, the vehicle may display the GUI shown in FIG. 4(c).

Refer to FIG. 4(c). The widget 340 and the dialog box 410 are closed, and an unread identifier appears in the notification center icon 305 in the status bar on the display interface 300 of the central display screen. The display interface 300 may further display a reminder widget 420, and the reminder widget 420 may display text content "The ultra power saving mode may be enabled when the battery level is low" and an Enable button 421 for enabling the ultra power saving mode.

For example, the unread identifier may be a red dot, a digital badge, or the like.

It should be understood that the reminder widget 420 may alternatively be the voice assistant reminder widget 330 described above. This is not limited in embodiments of this application.

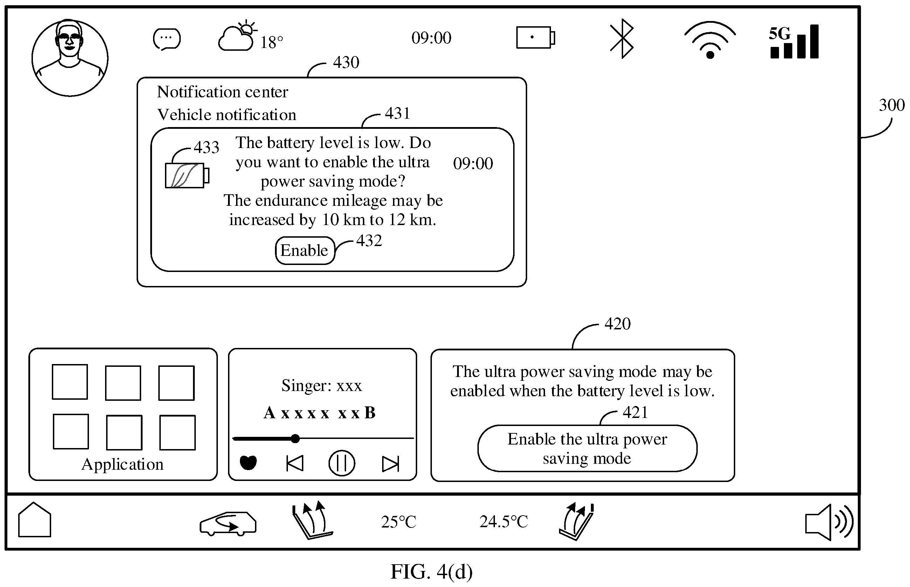

In a possible implementation, after detecting an operation of tapping the notification center icon 305 by the user, the vehicle may display a GUI shown in FIG. 4(d).

In another possible implementation, after detecting an instruction "Open the notification center" that is input by the user through a voice, the vehicle may display the GUI shown in FIG. 4(d).

Refer to FIG. 4(d). A notification center widget 430 may be displayed on the display interface 300 of the central display screen, and the notification center widget 430 may include an ultra power saving mode reminder widget 431. The widget 431 may include an ultra power saving mode icon 433, an Enable button 432, and text content "The battery level is low. Do you want to enable the ultra power saving mode? The endurance mileage may be increased by 10 km to 12 km."

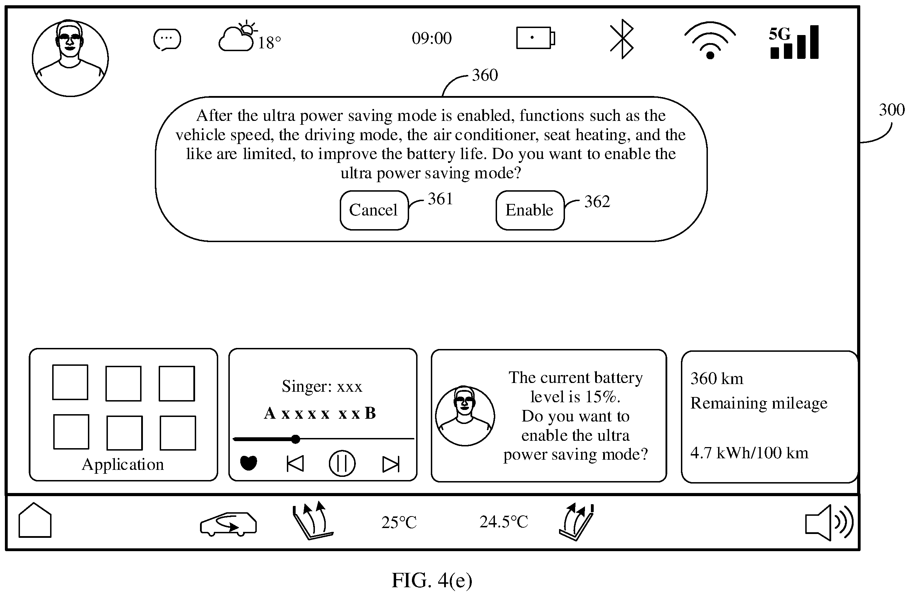

In a possible implementation, after detecting an operation of tapping the Enable button 432 by the user, the vehicle may display a GUI shown in FIG. 4(e).

In another possible implementation, after detecting an operation of tapping the Enable button 421 in the reminder widget 420 by the user, the vehicle may display the GUI shown in FIG. 4(e).

In another possible implementation, after detecting an instruction "Enable the ultra power saving mode" that is input by the user through a voice, the vehicle may display the GUI shown in FIG. 4(e).

Refer to FIG. 4(e). A widget 360 for reconfirming to enable the ultra power saving mode is displayed on the display interface 300. It should be understood that, for the figure, refer to related descriptions of FIG. 3(d).

In some other examples, when detecting an operation of tapping the Cancel button 361 by the user, or detecting an instruction that is input by the user through a voice and that indicates a negative meaning, like "Cancel" or "Disable", or detecting another interruption operation of the user, for example, tapping a blank area, or detecting another instruction that is input by the user through a voice and that is not related to the current ultra power saving mode, or detecting that the user does not respond within preset time, for example, 10s, the vehicle may display the GUI shown in FIG. 4(c).

It should be understood that, subsequently, for a manner of enabling the ultra power saving mode for the vehicle, refer to related descriptions of FIG. 3(e) and FIG. 3(f), and for a manner of exiting the ultra power saving mode by the vehicle, refer to related descriptions of FIG. 3(g). For brevity, details are not described again.

In this embodiment of this application, when detecting that the battery level decreases to the preset battery level A, the vehicle may output a reminder to the user in a plurality of manners; and when detecting that the user feeds back that the ultra power saving mode is not enabled, the vehicle may retain reminder information in the notification center and a display desktop, so that the user can subsequently enable the ultra power saving mode in a plurality of manners, and user experience can be improved.

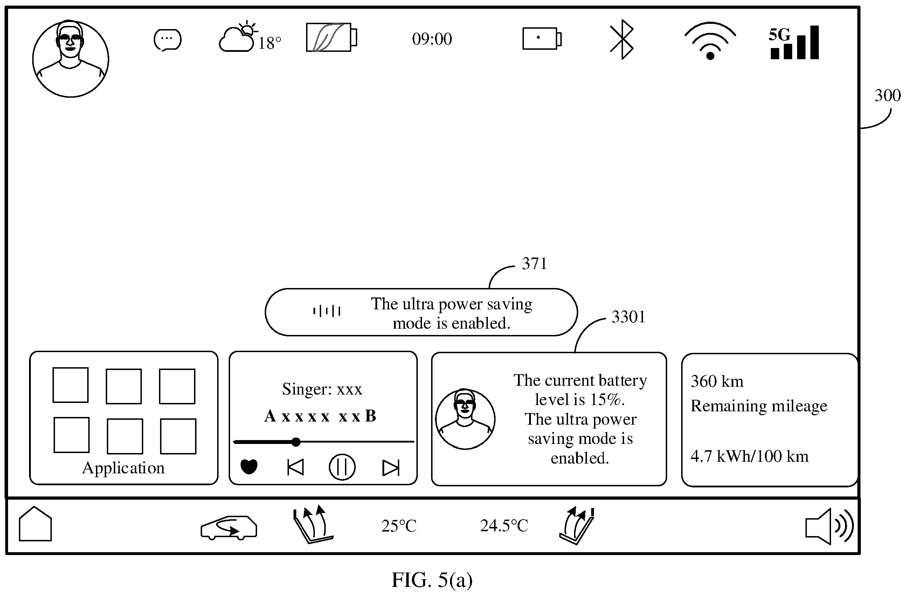

With reference to FIG. 5(a) to FIG. 5(d), the following describes a process of interaction between the vehicle and the user after the vehicle enters the ultra power saving mode.

For example, FIG. 5(a) to FIG. 5(d) show another group of GUIs according to an embodiment of this application. After the vehicle enters the ultra power saving mode, the voice assistant may feed back an enabling result to the user.

Refer to FIG. 5(a). A voice assistant reminder widget 3301 on the display interface 300 of the central display screen may display text content "The current battery level is 15%. The ultra power saving mode is enabled", and a voice assistant dialog box 371 may display broadcast content "The ultra power saving mode is enabled". In addition, the voice assistant may broadcast "The ultra power saving mode is enabled" to the user.

Then, the voice assistant may continue to broadcast, to the user, how to disable the ultra power saving mode.

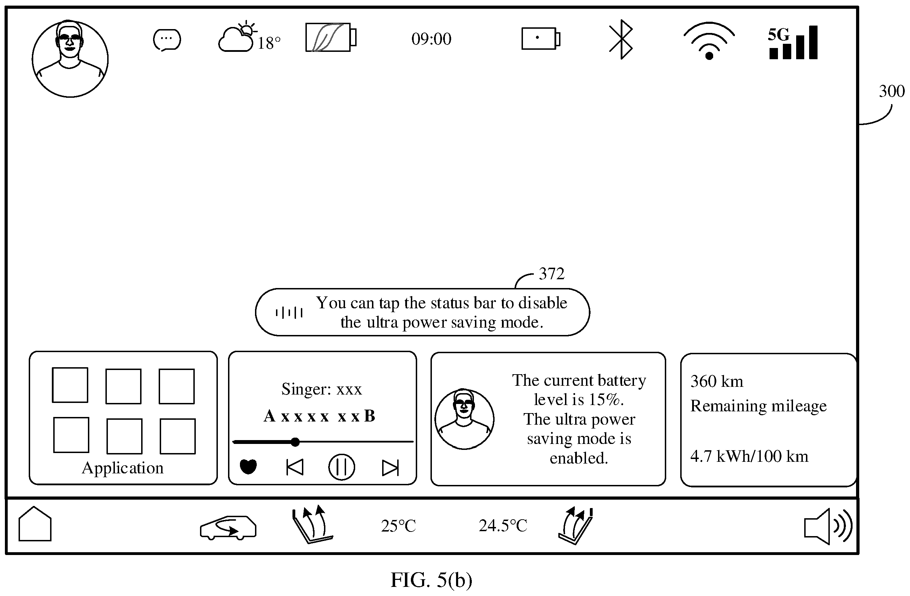

Refer to FIG. 5(b). The voice assistant may broadcast "You may tap the status bar icon to disable" to the user through a voice. In addition, "You may tap the status bar icon to disable" may be synchronously displayed in a voice assistant dialog box 372 on the display interface 300.

It should be understood that the voice assistant may randomly broadcast one of the following utterances to the user.
(1) The ultra power saving mode is automatically disabled in next charging.
(2) You can manually disable the ultra power saving mode on an energy interface of Settings.
(3) You can actively disable the ultra power saving mode through a voice.
(4) You can tap the status bar icon to disable the ultra power saving mode.

Then, the voice assistant may continue to broadcast, to the user, whether to search for a charging pile.

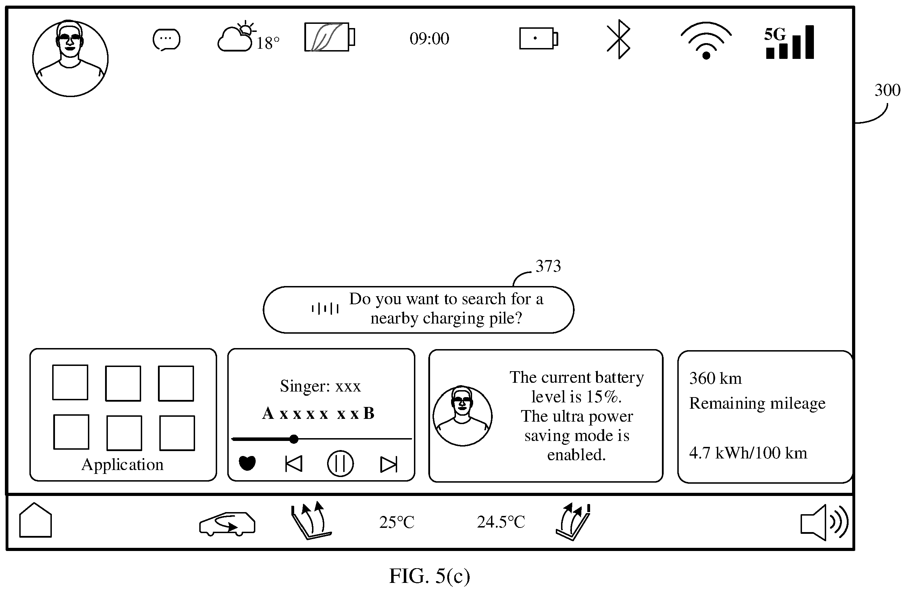

Refer to FIG. 5(c). The voice assistant may broadcast "Whether to search for a nearby charging pile" to the user through a voice. In addition, "Whether to search for a nearby charging pile" may be synchronously displayed in the voice assistant dialog box 372 on the display interface 300.

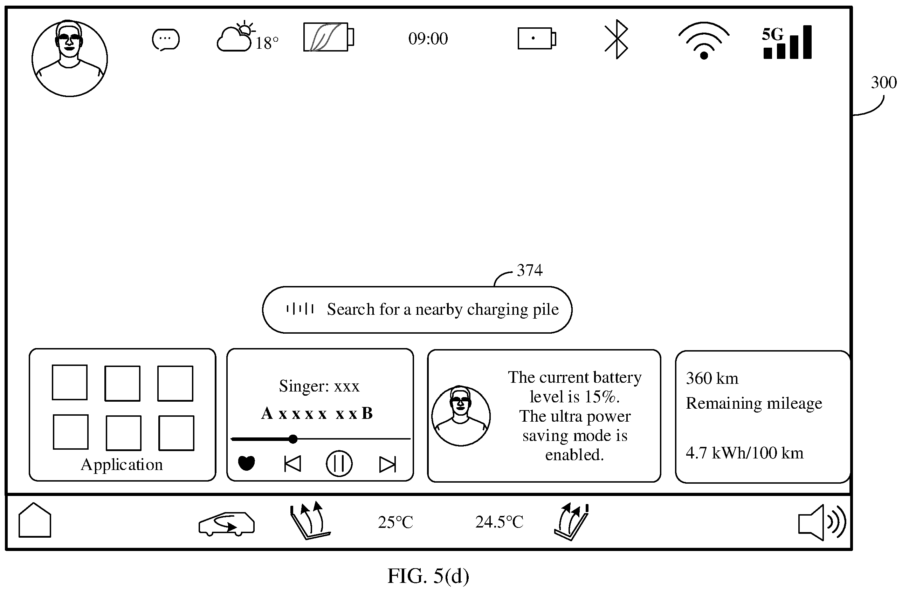

After detecting an instruction "Search for a nearby charging pile" that is input by the user through a voice, the vehicle may display a GUI shown in FIG. 5(d).

In this way, after entering the ultra power saving mode, if the vehicle determines that the vehicle has a charging requirement, the vehicle may automatically broadcast, to the user through a voice, whether a nearby charging pile needs to be searched for, to improve intelligence of the vehicle and driving experience of the user.

In some other examples, whether to search for a nearby charging pile may alternatively be used as one of utterances randomly broadcast by the voice assistant to the user in FIG. 5(b). This is not limited in embodiments of this application.

Refer to FIG. 5(d). The voice assistant displays the identified voice content "Search for a nearby charging pile" of the user in a dialog box 374.

Then, the voice assistant may broadcast "The following result is found " to the user, and the display interface 300 on the central display screen of the vehicle displays a found location of a nearby charging pile for the user to select.

In this embodiment of this application, after the vehicle enters the ultra power saving mode, the voice assistant may broadcast a result to the user through a voice, and broadcast reminder information for disabling the ultra power saving mode through a voice. In addition, the vehicle may further autonomously ask the user whether a nearby charging pile needs to be searched for, to improve driving experience of the user.

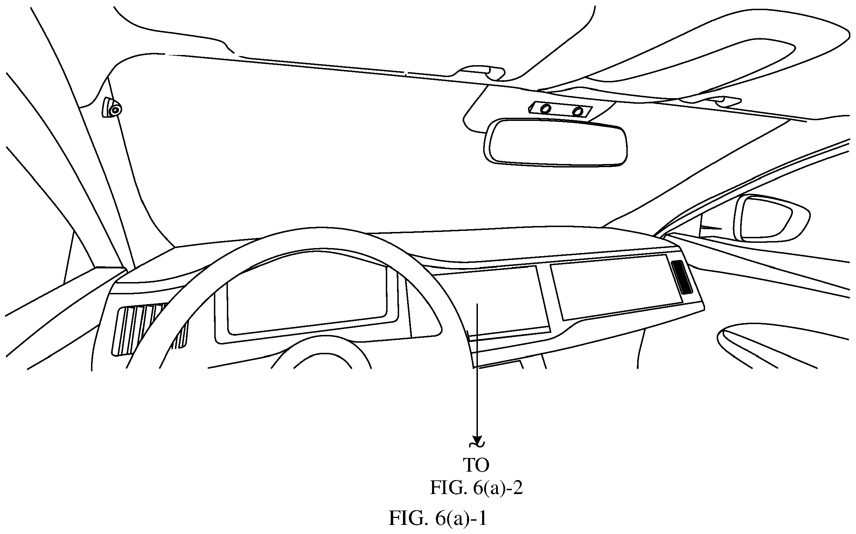

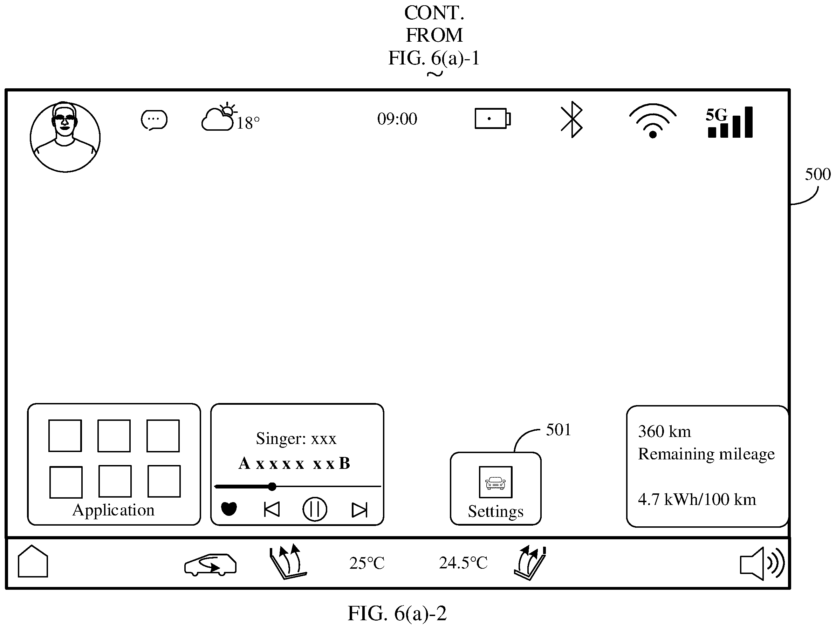

In some cases, the user may further view the ultra power saving mode on a display interface corresponding to Energy of Settings. The following describes the technical solution with reference to FIG. 6(a)-1 to FIG. 7(e).

For example, FIG. 6(a)-1 to FIG. 6(d) show a group of GUIs according to an embodiment of this application. FIG. 6(a)-1 to FIG. 6(d) show a display interface corresponding to energy of a vehicle that is being charged.

Refer to FIG. 6(a)-1 and FIG. 6(a)-2. A display interface 500 of the central display screen may include a Settings application 501.

It should be understood that for another part on the display interface 500, refer to related descriptions of the display interface 300.

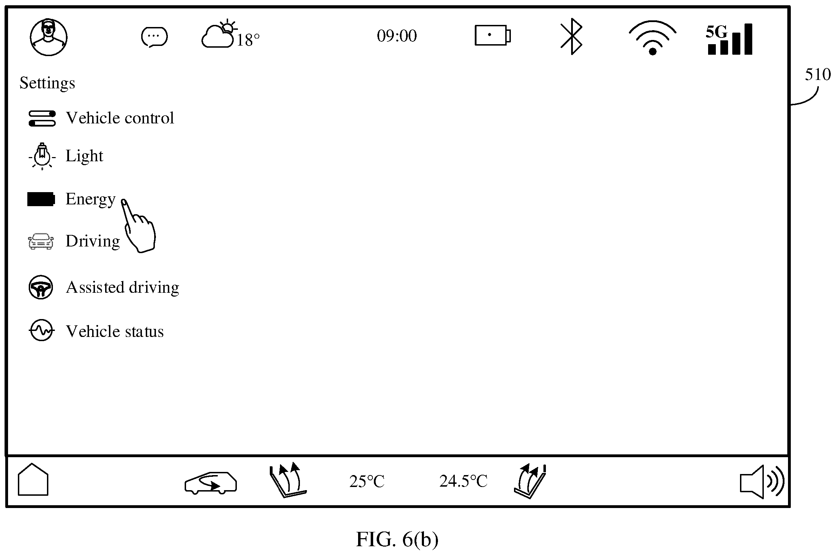

After detecting an operation of tapping the Settings application 501 by the user, the vehicle may display a GUI shown in FIG. 6(b). Alternatively, after detecting an instruction "Open Settings" that is input through a voice, the vehicle may display a GUI shown in FIG. 6(b).

Refer to FIG. 6(b). The GUI is a display interface 510 of Settings. The display interface 510 may include function controls such as Vehicle control, Light, Energy, Driving, Assisted driving, and Vehicle status. The user may access a corresponding setting interface by tapping a corresponding function control.

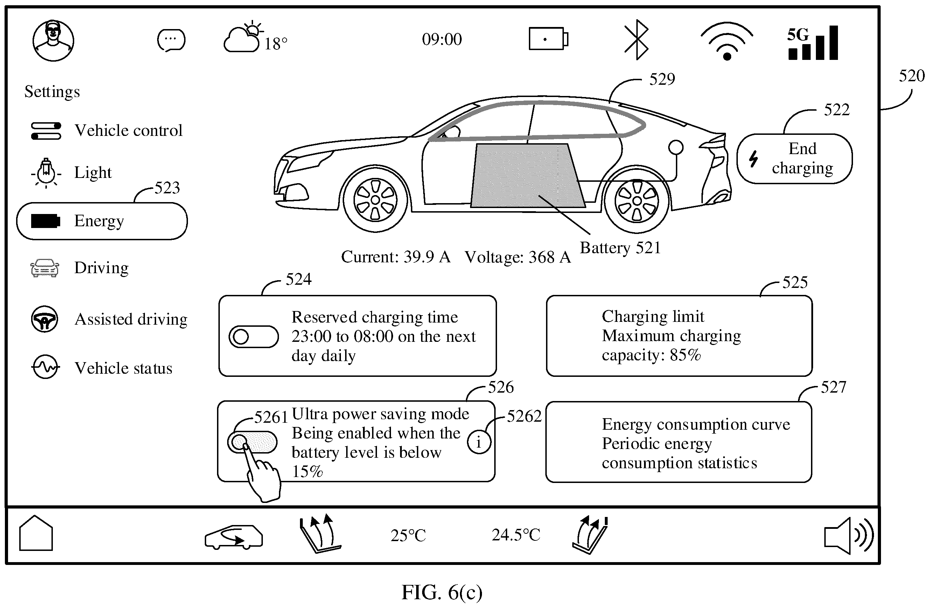

After detecting an operation of tapping an Energy control by the user, the vehicle may display a GUI shown in FIG. 6(c).

Refer to FIG. 6(c). The vehicle is being charged, and the GUI is a display interface 520 corresponding to Energy. On the display interface 520, an area 523 in which the Energy function control is located is in a selected state. For example, the area 523 may be highlighted or lowlighted. The display interface 520 may further include a diagram of a vehicle 529, a diagram of a battery 521, a charging end button 522, a charging reservation widget 524, a charging limit value widget 525, a dimmed ultra power saving mode widget 526, and an energy consumption widget 527. The display interface 520 may further include a charging animation and the like.

The ultra power saving mode widget 526 may include text content "Ultra power saving mode. Being enabled when the battery level is below 15%", an On button 5261, and a description icon 5262. When the user taps the description icon 5262, a related description of the ultra power saving mode may be viewed.

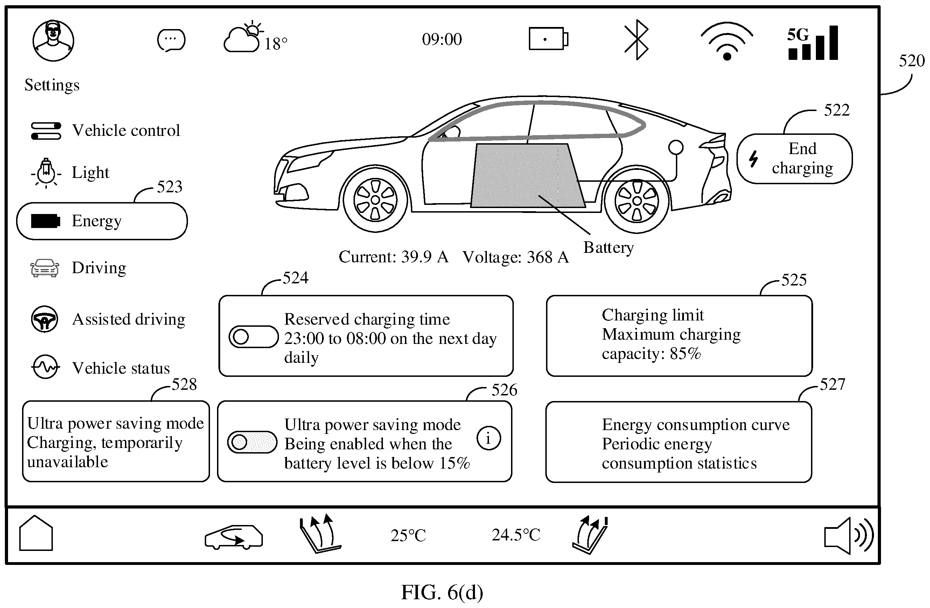

After detecting an operation of tapping the On button 5261 by the user, the vehicle may display a GUI shown in FIG. 6(d).

Refer to FIG. 6(d). A widget 528 may be displayed on the display interface 520, and the widget 528 may include text content "Ultra power saving mode. Charging, temporarily unavailable".

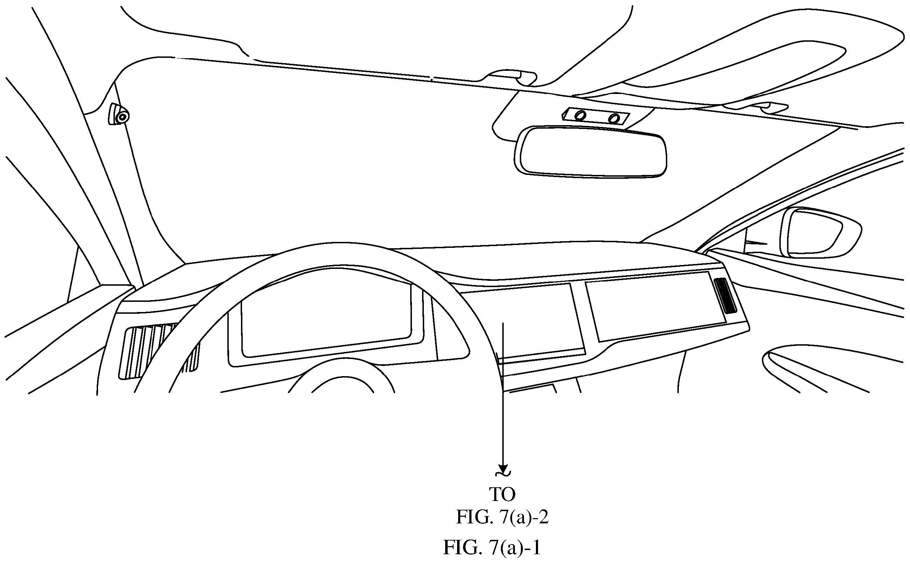

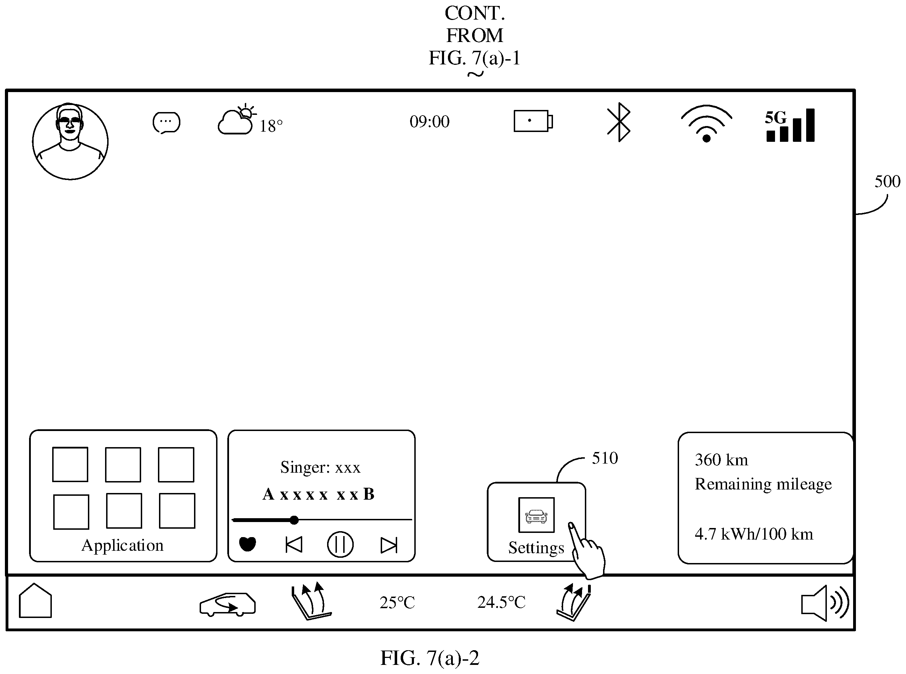

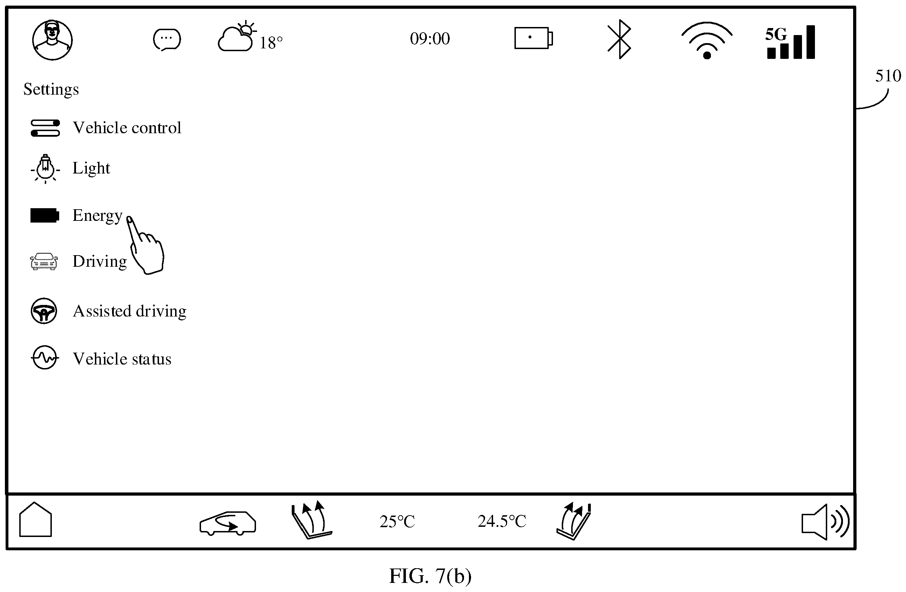

FIG. 7(a)-1 to FIG. 7(e) show another group of GUIs according to an embodiment of this application. Different from that in FIG. 6(a)-1 to FIG. 6(d), when the user views the energy interface, the vehicle is not being charged.

It should be understood that, for FIG. 7(a)-1 to FIG. 7(b), refer to related descriptions of FIG. 6(a)-1 to FIG. 6(b).

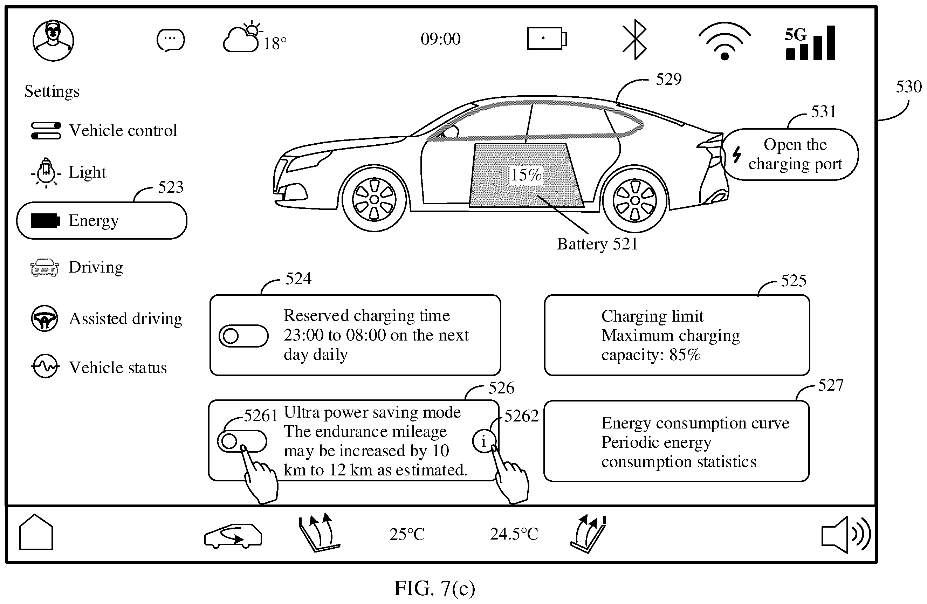

Refer to FIG. 7(c). Different from that in FIG. 6(c), the battery 521 of the vehicle 529 on a display interface 530 may display a current battery level, for example, 15%, and the display interface 530 may further include a charging port opening button 531.

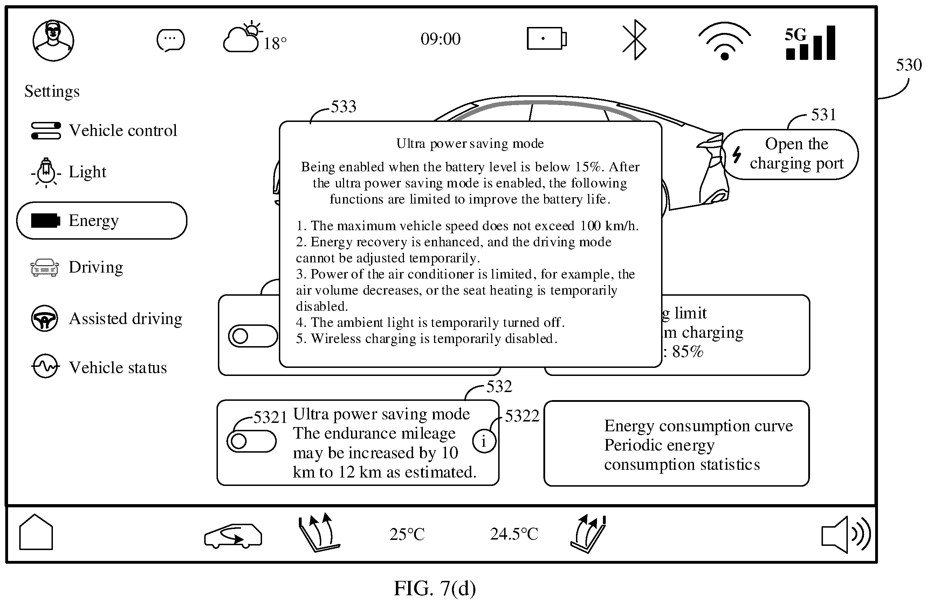

After detecting an operation of tapping the description icon 5262 by the user, the vehicle may display a GUI shown in FIG. 7(d).

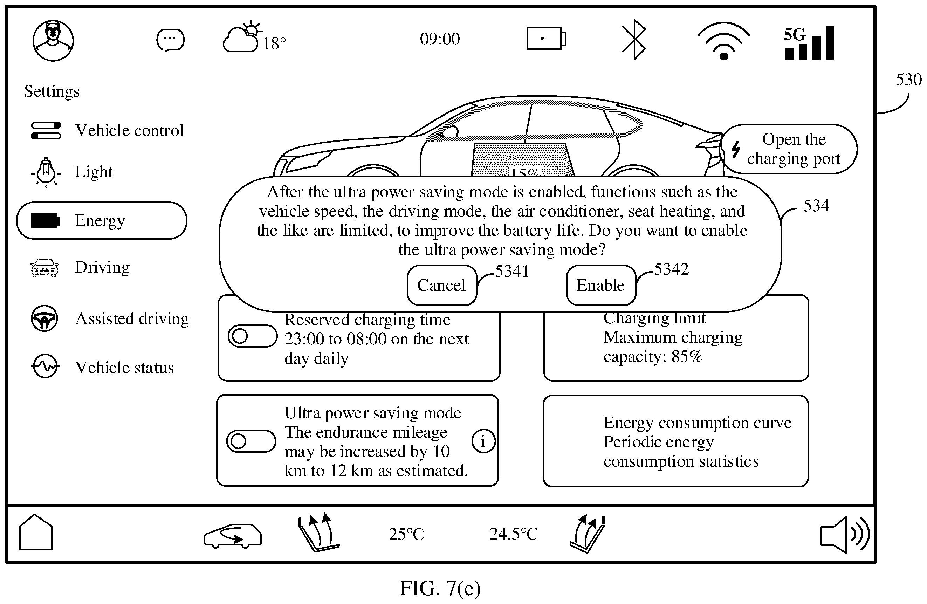

After detecting an operation of tapping the On button 5261 by the user, the vehicle may display a GUI shown in FIG. 7(e).

Refer to FIG. 7(d). A widget 533 may be displayed on the display interface 530, and the widget 533 may include detailed descriptions of the ultra power saving mode.

For example, the widget 533 may include text content:

Ultra power saving mode.

Being enabled when the battery level is below 15%. After the ultra power saving mode is enabled, the following functions are limited to improve the battery life.
1. The maximum vehicle speed does not exceed 100 km/h.
2. Energy recovery is enhanced, and the driving mode cannot be adjusted temporarily.
3. Power of the air conditioner is limited, for example, the air volume decreases, or the seat heating is temporarily disabled.
4. The ambient light is temporarily turned off.
5. Wireless charging is temporarily disabled.

It should be understood that the widget 533 may further include other content, for example, a mobile phone charging function is temporarily disabled, or a music playing function is temporarily disabled.

In some other examples, when the battery level is higher than 15%, the user may manually enable the ultra power saving mode.

Refer to FIG. 7(e). A confirmation widget 534 is displayed on the display interface 530. It should be understood that for the confirmation widget 534, refer to the foregoing related descriptions of the confirmation widget 360.

It should be understood that, subsequently, for a manner of enabling the ultra power saving mode for the vehicle, refer to related descriptions of FIG. 3(e) and FIG. 3(f). For brevity, details are not described again.

In this embodiment of this application, the user may further trigger, on the display interface corresponding to Energy of Settings, an operation of enabling the ultra power saving mode, so that the user can trigger, in a plurality of manners, to enable the ultra power saving mode for the vehicle, to improve user experience.

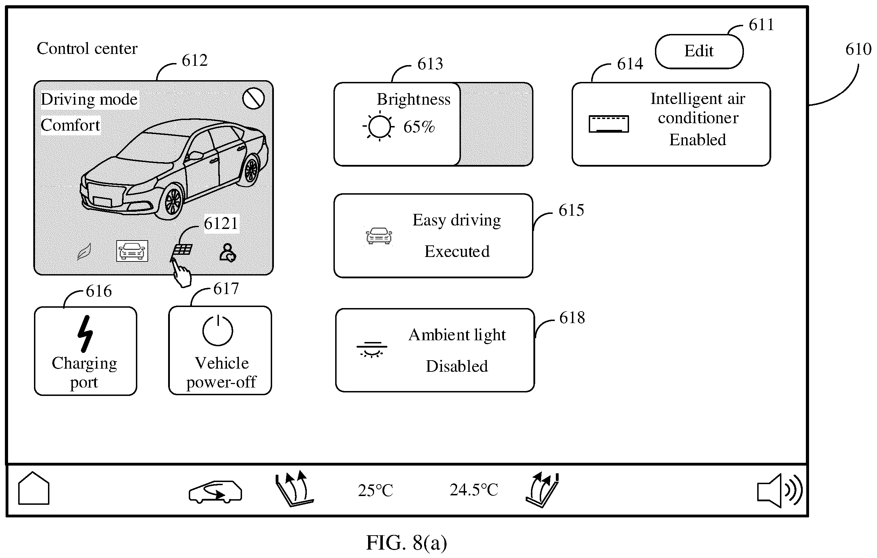

With reference to FIG. 8(a) to FIG. 9(c), the following describes a technical solution in which a vehicle in an ultra power saving mode avoids a conflict with another driving mode in this application.

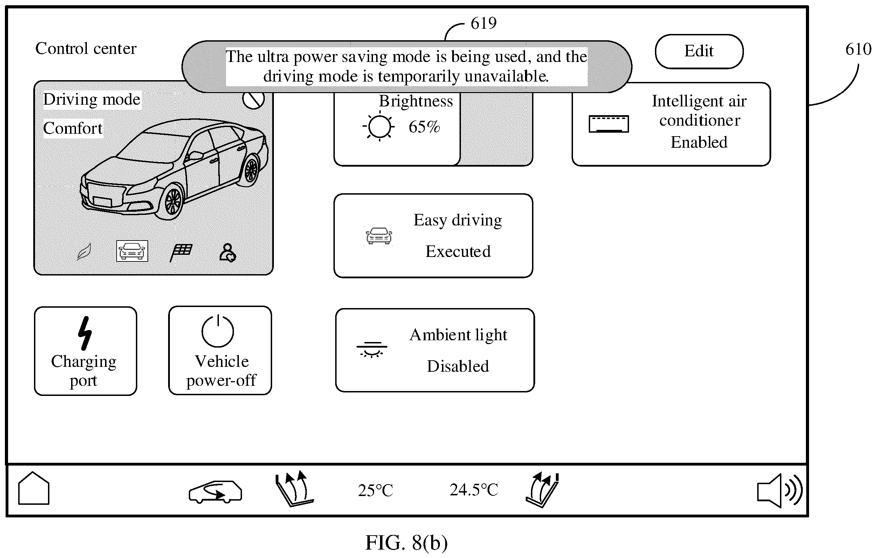

FIG. 8(a) and FIG. 8(b) are a diagram of another group of GUIs according to an embodiment of this application.

Refer to FIG. 8(a). The GUI may be a display interface 610 of a control center of the vehicle.

For example, after detecting an operation of swiping down from the top of a central display screen by the user, the vehicle may display the display interface 610. Alternatively, after detecting that a user can enter, through a voice, an instruction for opening the control center, the vehicle may display the display interface 610.

The display interface 610 may include at least a driving mode widget 612, a brightness widget 613, an intelligent air conditioner widget 614, an easy driving widget 615, a charging port widget 616, a vehicle power-off widget 617, an ambient light widget 618, and the like.

The display interface 610 may further include an Edit button 611. After tapping the Edit button 611, the user may delete some functions on the current display interface 610 by performing an operation, or may add another function to the display interface 610.

The display interface 610 may further include widgets of other functions of the vehicle, for example, a widget for controlling opening and closing of a trunk, a widget for closing windows by one tap, a widget for assisting parking, and a widget for controlling a child lock of a vehicle door.

It should be understood that, after the ultra power saving mode is enabled for the vehicle, brightness may be automatically adjusted to a brightness value A, for example, the brightness value A may be 65%, to save some power. The vehicle may also temporarily turn off the ambient light to save some power. However, when the user needs to adjust the brightness or the ambient light, the user can still adjust the brightness or the ambient light. This can improve user experience to an extent.

It should be understood that, to avoid a conflict between the ultra power saving mode and another driving mode, after the ultra power saving mode is enabled for the vehicle, the driving mode widget 612 may be dimmed, to remind the user that the driving mode is unavailable.

For example, the driving mode widget 612 may include a plurality of driving mode icons, for example, an energy saving mode icon, a comfort mode icon, a sport mode icon, and a customized icon. After detecting an operation of tapping a sport mode icon 6121 by the user, the vehicle may display a GUI shown in FIG. 8(b).

Refer to FIG. 8(b). A widget 619 may be displayed on the display interface 610. The widget 619 may display text content "The ultra power saving mode is being used, and the driving mode is temporarily unavailable".

It should be understood that the widget 619 may be a lightweight reminder, for example, may be a toast reminder, which means that the widget 619 cannot be selected by the user, and automatically disappears after preset display duration.

In this embodiment of this application, in the ultra power saving mode, another driving mode is temporarily unavailable, so that a conflict between driving modes can be avoided. If the user wants to switch to another driving mode, the user may first disable the ultra power saving mode, and then enter the another driving mode.

However, in some special cases, for example, when the driving modes of the user include a driving mode with a higher priority, for example, a snow mode or a get-unstuck mode, the vehicle may switch from the ultra power saving mode to the driving mode with a higher priority. In this case, the vehicle may disable the ultra power saving mode and enter the driving mode with a higher priority, to implement driving safety, enable the vehicle to get out of trapping, or the like, thereby improving driving experience of the user.

In some other embodiments, when the vehicle is in the snow mode or the get-unstuck mode, and the vehicle detects that a battery level is lower than a preset battery level A, to ensure driving safety, the vehicle does not remind the user whether to enable the ultra power saving mode.

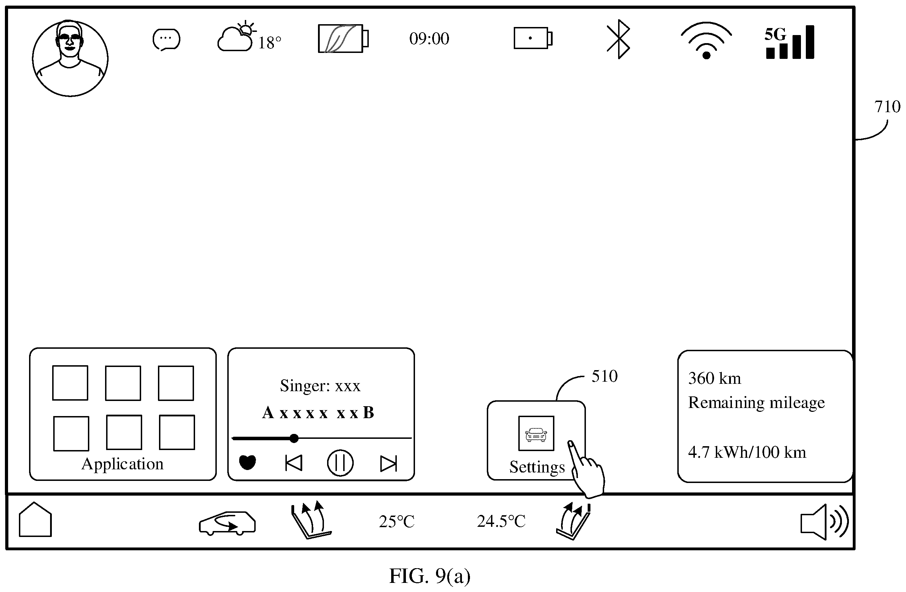

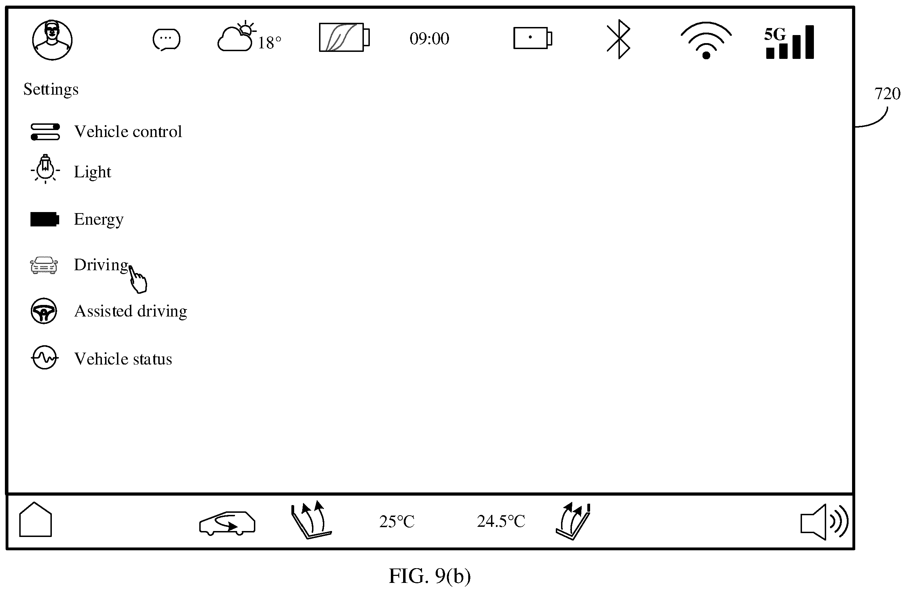

FIG. 9(a) to FIG. 9(c) are a diagram of another group of GUIs according to an embodiment of this application. For FIG. 9(a) and FIG. 9(b), refer to related descriptions of FIG. 6(a)-1 to FIG. 6(b).

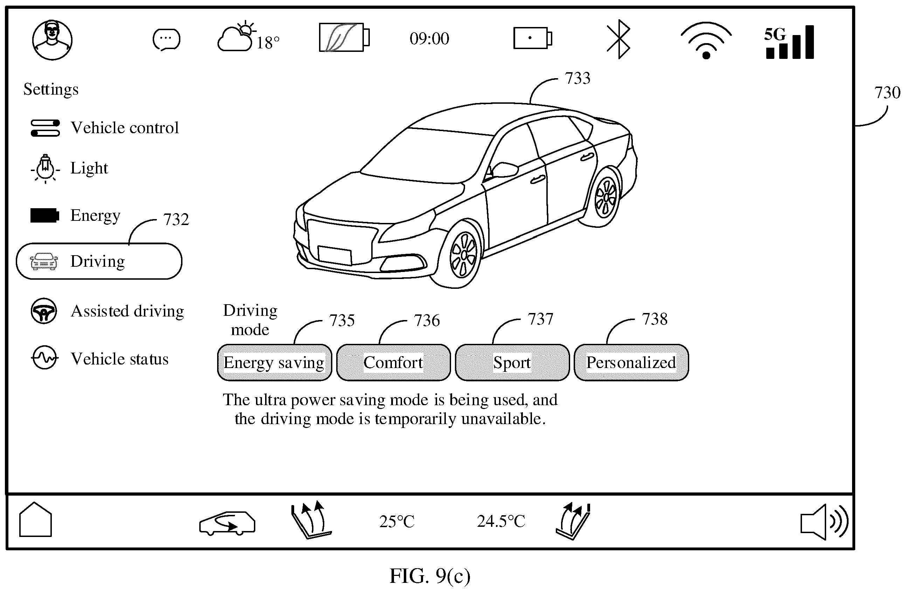

On a display interface 720, when detecting that a user taps driving, a vehicle may display a GUI shown in FIG. 9(c).

Alternatively, when detecting an instruction for starting driving that is input by the user through a voice, the vehicle may display a GUI shown in FIG. 9(c).

Refer to FIG. 9(c). The GUI is a display interface 730 of a middle frame screen. An area corresponding to driving on the display interface 730 may be in a selected state. The display interface 730 may further include a 3D diagram of a vehicle 733, an energy saving mode widget 735, a comfort mode widget 736, a sport mode widget 737, and a personalized widget 738. The display interface may further include text content "The ultra power saving mode is being used, and the driving mode is temporarily unavailable".

In this embodiment of this application, in the ultra power saving mode, another driving mode is temporarily unavailable, so that a conflict between driving modes can be avoided. If the user wants to switch to another driving mode, the user may first disable the ultra power saving mode, and then enter the another driving mode.

Similarly, in some special cases, for example, when the driving modes of the user include a driving mode with a higher priority, for example, a snow mode or a get-unstuck mode, the vehicle may switch from the ultra power saving mode to the driving mode with a higher priority. In this case, the vehicle may disable the ultra power saving mode and enter the driving mode with a higher priority, to implement driving safety, enable the vehicle to get unstuck, or the like, thereby improving driving experience of the user.

In some other embodiments, when the vehicle is in the snow mode or the get-unstuck mode, and the vehicle detects that a battery level is lower than a preset battery level A, to ensure driving safety, the vehicle does not remind the user whether to enable the ultra power saving mode.

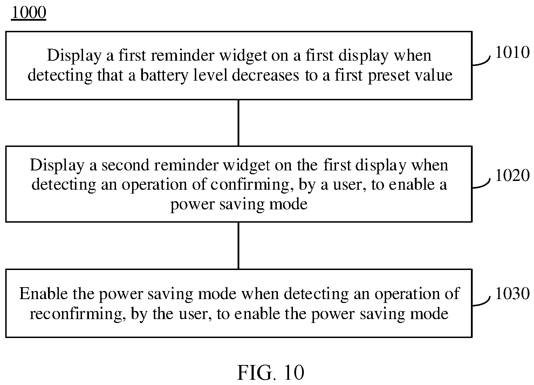

FIG. 10 is a schematic flowchart of a power saving method according to an embodiment of this application. As shown in FIG. 10, the method 1000 may include step 1010 to step 1030.

1010: Display a first reminder widget on a first display when detecting that a battery level decreases to a first preset value, where the first reminder widget reminds a user whether to enable a power saving mode.

For example, the first display may be a central display screen of a vehicle.

For example, the first preset value may be the preset battery level A described above. For example, the preset battery level A may be 15%, 20%, 10%, or the like. In this embodiment of this application, an example in which the preset battery level A is 15% is used for description. However, this should not impose any limitation on this application.

Refer to FIG. 3(b)-1 and FIG. 3(b)-2. The first display may be the central display screen of the vehicle, and the first reminder widget may be the widget 340. When detecting that the battery level decreases to 15%, the vehicle may display the widget 340 on the central display screen, to remind the user to enable an ultra power saving mode.

1020: Display a second reminder widget on the first display when detecting an operation of confirming, by the user, to enable the power saving mode, where the second reminder widget reminds the user again whether to enable the power saving mode.

It should be understood that the operation of confirming, by the user, to enable the power saving mode may be a voice operation, a manual tap-to-enable operation, or the like.

For example, refer to FIG. 3(c) and FIG. 3(d). The second reminder widget may be the widget 360. After detecting an instruction "Enable" that is input by the user through a voice, the vehicle may display the widget 360 on the central display screen, to remind the user again whether to confirm to enable the ultra power saving mode.

1030: Enable the power saving mode when detecting the operation of reconfirming, by the user, to enable the power saving mode.

It should be understood that the operation of reconfirming, by the user, to enable the power saving mode may be a voice operation, a manual tap-to-enable operation, or the like.

For example, refer to FIG. 3(e) and FIG. 3(f). After the vehicle detects the instruction "Enable" that is input by the user through a voice, the ultra power saving mode may be enabled.

It should be understood that, in this embodiment of this application, after the ultra power saving mode is enabled for the vehicle, functions of the vehicle are limited in a specific program, for example, a vehicle speed limit or an in-vehicle air conditioner limit. For details, refer to the foregoing related descriptions.

In embodiments of this application, when it is detected that the battery level decreases to the first preset value, the first reminder widget reminding the user whether to enable the power saving mode may be automatically displayed on the display; when the operation of confirming, by the user, to enable the power saving mode is detected, the second reminder widget reminding the user again whether to enable the power saving mode is further displayed; and when the operation of reconfirming, by the user, to enable the power saving mode is detected, the power saving mode is enabled. In the technical solution, the user may be reminded, in an active reminding manner, whether to enable the power saving mode, so that user experience can be improved. In addition, because the power saving mode imposes some limitations on the vehicle, the user is reminded through a plurality of reminders, to help improve driving safety.

In some embodiments, the method 1000 may further include the following step.

Display a third reminder widget on the first display when detecting an operation of confirming, by the user, not to enable the power saving mode or when detecting an operation of the user that is not related to the power saving mode, where the third reminder widget reminds the user to enable the power saving mode by using the third reminder widget.

It should be understood that the operation of confirming, by the user, not to enable the power saving mode may be that the user inputs, through a voice, an instruction that indicates a negative meaning, like "No", "Disable", or "Cancel". Alternatively, the operation of confirming, by the user, not to enable the power saving mode may be that the user taps a Cancel button or the like.

The operation of the user that is not related to the power saving mode may be that the user inputs another instruction through a voice, for example, Query weather or Open the window. Alternatively, the operation of the user that is not related to the power saving mode may be tapping, by the user, a blank area on the first display, or an area other than the first reminder widget or the second reminder widget.

Refer to FIG. 4(b) and FIG. 4(c). In some examples, the third reminder widget may be the widget 420. After detecting an instruction "Disable" that is input by the user through a voice, the vehicle displays the widget 420 on the central display screen. The user may tap the widget 420 to re-enter a reconfirmation process for enabling the ultra power saving mode.

In embodiments of this application, the third reminder widget may be displayed on the first display when the operation of confirming, by the user, not to enable the power saving mode or the operation of the user that is not related to the power saving mode is detected, and the user may perform an operation of enabling the power saving mode by using the third reminder widget. In the technical solution, the user can conveniently perform the operation of enabling the power saving mode by tapping the third reminder widget on a display, to improve user experience.

In some embodiments, the method 1000 may further include the following steps.

Display the second reminder widget on the first display when detecting an operation of tapping the third reminder widget by the user.

Enable the power saving mode when detecting the operation of reconfirming, by the user, to enable the power saving mode.

In this embodiment of this application, when the user taps the third reminder widget, a reminder widget for a reconfirmation may be further displayed on the first display, and the power saving mode is enabled when a confirmation operation of the user is detected. In the technical solution, the user may be reminded through a plurality of reminders, to help improve driving safety.

In some embodiments, when the power saving mode is enabled, the method 1000 may further include the following steps.

Display an identifier of the power saving mode in a status bar on the first display; and/or display the identifier of the power saving mode on a second display.

For example, the first display is the central display screen of the vehicle, the second display is an instrument display screen of the vehicle, and the identifier of the power saving mode may be an icon. Refer to FIG. 3(f). When the ultra power saving mode is enabled for the vehicle, an ultra power saving mode icon 3041 is displayed in the status bar on the central display screen, and an ultra power saving mode icon 3221 is displayed on the instrument display screen.

In this embodiment of this application, when the power saving mode is enabled, the identifier of the power saving mode may be displayed, to notify the user that the power saving mode is currently used.

In some embodiments, when the power saving mode is enabled, the method 1000 may further include the following step.

Output a first reminder voice, where the first reminder voice reminds the user whether to search for a nearby charging pile.

For example, refer to FIG. 5(b) and FIG. 5(c). When the ultra power saving mode is enabled for the vehicle, an in-vehicle voice assistant may output a voice reminder indicating whether to search for a nearby charging pile.

After it is detected that the user says Enable, a nearest charging pile may be directly navigated to, to meet a charging requirement of the user.

In this embodiment of this application, when the power saving mode is enabled, the user may be automatically reminded whether to search for the nearby charging pile. In the technical solution, when the power saving mode is enabled for the vehicle, the vehicle may have a charging requirement. Therefore, a voice reminds the user, so that intelligence of the vehicle and driving experience of the user can be improved.

In some other embodiments, before the first reminder voice is output, the method 1000 may further include the following step.

Output a reminder voice A, where the reminder voice A reminds the user that the vehicle has entered the power saving mode; or output a reminder voice B reminding to exit the power saving mode.

In this embodiment of this application, the user may be reminded, in a voice reminding manner, that the vehicle has entered the power saving mode, or the user may be reminded, in a voice reminding manner, of how to exit the power saving mode, to help improve user experience.

In some embodiments, before the first reminder widget is displayed on the first display, the method 1000 may further include the following step.

Output an alert tone of the power saving mode.

In this embodiment of this application, when it is detected that the battery level decreases to the first preset value, the alert tone of the power saving mode may be output to the user, and the user is reminded, in a plurality of manners such as the output alert tone and a reminder widget, whether to enable the power saving mode, so that the user can conveniently enable the ultra power saving mode.

In some embodiments, when the first reminder widget is displayed on the first display, and/or the second reminder widget is displayed on the first display, the method 1000 may further include the following step.

Output a second reminder voice, where the second reminder voice reminds the user whether to enable the power saving mode.

In embodiments of this application, when a reminder widget is displayed on a display, a voice reminder message is output to the user at the same time, so that the user can be reminded, in a plurality of manners, whether to enable the power saving mode. Therefore, the user can obtain the reminder message more conveniently in a driving process, and driving safety can be reminded to an extent.

In some embodiments, before the alert tone of the power saving mode is output, the method 1000 may further include the following steps.

Determine that the vehicle is not currently in a complex driving operation; and/or
determine that a current distance between the vehicle and a navigation destination is longer than a preset distance.

For example, the complex driving operation may be turning consecutively, passing an oncoming vehicle, or the like.

It should be understood that the preset distance may be determined based on a remaining traveling mileage of the vehicle, or the preset distance may be set by a system or the user. For example, the preset distance is half of the remaining traveling mileage. Alternatively, the preset distance is 30 km, 50 km, or the like.

In this way, before reminding the user whether to enable the ultra power saving mode, the vehicle may determine a current status of the vehicle. If the vehicle is in the complex driving operation or is close to the destination, the vehicle may first not remind the user to enable the ultra power saving mode, to improve driving safety.

In this embodiment of this application, before outputting the alert tone, the vehicle further needs to determine that the vehicle is not currently in the complex driving operation, and/or determine that the current distance between the vehicle and the navigation destination is longer than the preset distance, so that it can be avoided that a voice is output to the user when the user is highly focused. In the technical solution, driving safety can be reminded to an extent.

In some embodiments, before the first reminder widget is displayed on the first display, the method 1000 may further include the following step.

Determine that the vehicle is not currently in a preset driving mode.

For example, the preset driving mode may include but is not limited to a get-unstuck mode, a snow mode, an adaptive cruise control mode, or the like.

When the vehicle is in the preset driving mode, to ensure driving safety to a maximum extent, functions of the vehicle may not be expected to be limited. Therefore, even if the vehicle detects that the battery level decreases to the first preset value, the vehicle does not perform a reminder for enabling the ultra power saving mode. In other words, when the vehicle is in the preset driving mode, when detecting that the battery level decreases to the first preset value, the vehicle does not perform a pop-up reminder or a voice reminder for enabling the power saving mode. In the control center, the power saving mode may not be selected. When the vehicle exits the preset driving mode, the vehicle may perform a reminder for enabling the power saving mode. The technical solution helps improve driving safety.

An embodiment of this application further provides a power saving apparatus. The power saving apparatus may include a control unit, configured to control a first display to display a first reminder widget when it is detected that a battery level decreases to a first preset value, where the first reminder widget reminds a user whether to enable a power saving mode.

The control unit is further configured to control the first display to display a second reminder widget when an operation of confirming, by the user, to enable the power saving mode is detected, where the second reminder widget reminds the user again whether to enable the power saving mode.

The control unit is further configured to enable the power saving mode when an operation of reconfirming, by the user, to enable the power saving mode is detected.

In some embodiments, the control unit is further configured to control the first display to display a third reminder widget when an operation of confirming, by the user, not to enable the power saving mode or an operation of the user that is not related to the power saving mode is detected, where the third reminder widget reminds the user to enable the power saving mode by using the third reminder widget.

In some embodiments, the control unit is further configured to control the first display to display the second reminder widget when an operation of tapping the third reminder widget by the user is detected.

The control unit is further configured to enable the power saving mode when the operation of reconfirming, by the user, to enable the power saving mode is detected.

In some embodiments, when the power saving mode is enabled, the control unit is further configured to: control a status bar on the first display to display an identifier of the power saving mode; and/or control a second display to display the identifier of the power saving mode.

In some embodiments, the power saving apparatus further includes an output module, and when the power saving mode is enabled, the output module is configured to output a first reminder voice, where the first reminder voice reminds the user whether to search for a nearby charging pile.

In some embodiments, the power saving apparatus further includes the output module, and before the control unit controls the first display to display the first reminder widget, the output module is configured to output an alert tone of the power saving mode.

In some embodiments, before the control unit controls the first display to display the first reminder widget, the output module is further configured to output a second reminder voice, where the second reminder voice reminds the user whether to enable the power saving mode.

In some embodiments, the power saving apparatus further includes a determining module, and before the output module outputs the alert tone of the power saving mode, the determining module is configured to: determine that a vehicle is not currently in a complex driving operation; and/or determine that a current distance between the vehicle and a navigation destination is longer than a preset distance.

In some embodiments, the power saving apparatus further includes the determining module, and before the control module controls the first display to display the first reminder widget, the determining module is further configured to determine that the vehicle is not currently in a preset driving mode.

An embodiment of this application further provides a power saving apparatus, including at least one processor and an interface circuit, where the processor communicates with a display apparatus through the interface circuit, and the at least one processor is configured to: perform the method according to any one of the foregoing possible implementations, and control a display interface of the display apparatus.

For example, the power saving apparatus may be the vehicle described above.

An embodiment of this application further provides a vehicle, including at least one processor and a memory, where the at least one processor is coupled to the memory, and is configured to read and execute instructions in the memory, for performing the method according to any one of the foregoing possible implementations.

An embodiment of this application further provides a chip. The chip includes a processor and a communication interface. The communication interface is configured to receive a signal and transmit the signal to the processor. The processor processes the signal, for performing the power saving method according to any one of the foregoing possible implementations.

An embodiment further provides a computer-readable storage medium. The computer-readable storage medium stores computer instructions. When the computer instructions are run on an electronic device, the electronic device is enabled to perform the foregoing related method steps, to implement the power saving method in the foregoing embodiments.

An embodiment further provides a computer program product. When the computer program product runs on a computer, the computer is enabled to perform the foregoing related steps, to implement the power saving method in the foregoing embodiments.

In addition, an embodiment of this application further provides an apparatus. The apparatus may be specifically a chip, a component, or a module. The apparatus may include a processor and a memory that are connected. The memory is configured to store a computer-executable instruction. When the apparatus runs, the processor may execute the computer-executable instruction stored in the memory, to enable the chip to perform the power saving method in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding methods provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical mechanisms. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power saving method, comprising:
displaying a first reminder widget on a first display when detecting that a battery level decreases to a first preset value, wherein the first reminder widget reminds a user whether to enable a power saving mode;
displaying a second reminder widget on the first display when detecting an operation of confirming, by the user, to enable the power saving mode, wherein the second reminder widget reminds the user again whether to enable the power saving mode; and
enabling the power saving mode when detecting an operation of reconfirming, by the user, to enable the power saving mode.

2. The method according to claim 1, wherein the method further comprises:
displaying a third reminder widget on the first display when detecting an operation of confirming, by the user, not to enable the power saving mode or when detecting an operation of the user that is not related to the power saving mode, wherein the third reminder widget reminds the user to enable the power saving mode by using the third reminder widget.

3. The method according to claim 2, wherein the method further comprises:
displaying the second reminder widget on the display when detecting an operation of tapping the third reminder widget by the user; and
enabling the power saving mode when detecting the operation of reconfirming, by the user, to enable the power saving mode.

4. The method according to any one of claims 1 to 3, wherein when the power saving mode is enabled, the method further comprises:
displaying an identifier of the power saving mode in a status bar on the first display; and/or
displaying the identifier of the power saving mode on the second display.

5. The method according to any one of claims 1 to 4, wherein when the power saving mode is enabled, the method further comprises:
outputting a first reminder voice, wherein the first reminder voice reminds the user whether to search for a nearby charging pile.

6. The method according to any one of claims 1 to 5, wherein the method further comprises:
outputting an alert tone of the power saving mode.

7. The method according to any one of claims 1 to 6, wherein the method further comprises:
outputting a second reminder voice, wherein the second reminder voice reminds the user whether to enable the power saving mode.

8. The method according to claim 6 or 7, wherein the method further comprises:
determining that a vehicle is not currently in a complex driving operation; and/or
determining that a current distance between the vehicle and a navigation destination is longer than a preset distance.

9. The method according to any one of claims 1 to 8, wherein before the displaying a first reminder widget on a first display, the method further comprises:
determining that the vehicle is not currently in a preset driving mode.

10. A power saving apparatus, comprising a module configured to implement the method according to any one of claims 1 to 9.

11. A power saving apparatus, wherein the apparatus comprises at least one processor and an interface circuit, and the processor communicates with a display apparatus through the interface circuit; and
the at least one processor is configured to: perform the method according to any one of claims 1 to 9, and control a display interface of the display apparatus.

12. A vehicle, comprising at least one processor and a memory, wherein the at least one processor is coupled to the memory, and is configured to read and execute instructions in the memory, for performing the method according to any one of claims 1 to 9.

13. A chip, wherein the chip comprises a processor and a data interface, and the processor reads, through the data interface, instructions stored in a memory, for performing the method according to any one of claims 1 to 9.

14. A computer-readable storage medium, wherein the computer-readable storage medium stores a computer program, and when the computer program is executed by a computer, the method according to any one of claims 1 to 9 is performed.
